# EUROPÄISCHE PATENTSCHRIFT

(11) **EP 4 487 019 B1**
(45) Veröffentlichungstag und Bekanntmachung des Hinweises auf die Patenterteilung: **12.08.2026**
(21) Anmeldenummer: 22835696.0
(22) Anmeldetag: 12.12.2022
(51) Int. Cl.: B62J 7/08, B62J 11/00, F16B 21/02

(54) **VERSCHLUSSVORRICHTUNG ZUM VERBINDEN ZWEIER BAUGRUPPEN**
CLOSURE DEVICE FOR CONNECTING TWO ASSEMBLIES
DISPOSITIF DE FERMETURE POUR RELIER DEUX ENSEMBLES

(30) Priorität: 28.02.2022 DE 102022104735
(43) Veröffentlichungstag der Anmeldung: 08.01.2025
(73) Patentinhaber: Fidlock GmbH, 30659 Hannover (DE)
(72) Erfinder: HÜWEL, Florian, 30449 Hannover (DE); FIEDLER, Joachim, 30519 Hannover (DE)
(74) Vertreter: Maikowski & Ninnemann Patentanwälte Partnerschaft mbB
(86) Internationale Anmeldenummer: PCT/EP2022/085410
(87) Internationale Veröffentlichungsnummer: WO 2023/160854

(56) Entgegenhaltungen:
- EP-B1- 2 640 604
- WO-A1-2010/084191
- DE-A1- 102016 216 422
- DE-A1- 102019 215 277

## Beschreibung

Die Erfindung betrifft eine Verschlussvorrichtung zum Verbinden zweier Baugruppen miteinander nach dem Oberbegriff des Anspruchs 1.

Eine derartige Verschlussvorrichtung umfasst ein einer ersten der Baugruppen zugeordnetes, erstes Verschlussteil, das ein Gehäuseteil und zwei Steckplätze mit je zumindest einem ersten Eingriffsvorsprung aufweist. An jedem der Steckplätze ist ein zu dem Gehäuseteil verstellbares Verstellelement angeordnet. Die Verschlussvorrichtung umfasst zudem ein einer zweiten der Baugruppen zugeordnetes, zweites Verschlussteil, das zwei Eingriffselemente mit je zumindest einem zweiten Eingriffsvorsprung aufweist. Zum Schließen der Verschlussvorrichtung ist jedes der Eingriffselemente des zweiten Verschlussteils an einen der Steckplätze des ersten Verschlussteils ansetzbar. In einer Schließstellung stehen die ersten Eingriffsvorsprünge mit den zweiten Eingriffsvorsprüngen zum Halten des ersten Verschlussteils und des zweiten Verschlussteils entgegen der Schließrichtung aneinander in Eingriff. Zum Öffnen der Verschlussvorrichtung sind das erste Verschlussteil und das zweite Verschlussteil voneinander trennbar, wobei das erste Verschlussteil und das zweite Verschlussteil zum Öffnen der Verschlussvorrichtung entlang einer zur Schließrichtung (X) senkrechten Bewegungsebene relativ zueinander bewegbar sind.

Über eine solche Verschlussvorrichtung soll, in der Schließstellung, ein zuverlässiger, fester, belastbarer Halt der Verschlussteile aneinander hergestellt werden, um die den Verschlussteilen zugeordneten Baugruppen miteinander zu verbinden und mechanisch aneinander zu halten. Die Verschlussvorrichtung soll hierbei einfach zu handhaben sein, indem die Verschlussvorrichtung komfortabel geschlossen und auch komfortabel wieder geöffnet werden kann.

Eine solche Verschlussvorrichtung kann beispielsweise an einem Fahrzeug, zum Beispiel einem Kraftfahrzeug oder einem Fahrrad, verwendet werden, um Baugruppen miteinander zu verbinden. Beispielsweise kann eine solche Verschlussvorrichtung dazu dienen, eine Baugruppe an einem Fahrradrahmen anzubringen.

Bei der Verschlussvorrichtung ist wünschenswert, dass in der Schließstellung Verschlussteile vibrationssicher und klapperfrei aneinander gehalten sind, wobei zu bedenken ist, dass mechanische Fertigungstoleranzen bestehen können. Im Betrieb soll für ein gesteigertes Nutzerempfinden eine feste, im Wesentlichen spielfreie Verbindung der Verschlussteile zueinander geschaffen sein.

Bei einer aus der DE 10 2018 123 026 A1 bekannten Verschlussvorrichtung werden Verschlussteilen an Verschlusselemente, die an einem Grundkörper angeordnet sind, angesetzt, um die Verschlussvorrichtung zu schließen. An den Verschlusselementen und den Verschlussteilen sind Sperrabschnitte angeordnet, die in der Schließstellung der Verschlussvorrichtung mechanisch miteinander in Eingriff stehen und eine formschlüssige Verbindung herstellen. Die Verschlussvorrichtung der DE 10 2018 123 026 A1 verwirklicht beispielsweise einen Verschluss für Gurte eines Kinderwagens oder eines Kindersitzes.

Die WO 2020/216955 A1 beschreibt eine Verschlussvorrichtung zum Verbinden von zwei Baugruppen miteinander, die ein erstes Verschlussteil mit einem Sperrstück und einem ersten Magnetelement und ein zweites Verschlussteil mit einer Sperraufnahme und einem zweiten Magnetelement aufweist. Zusätzlich weist die Verschlussvorrichtung einen an dem zweiten Verschlussteil angeordneten Verriegelungsmechanismus auf, der ein Verrieglungselement und einen mit dem Verriegelungselement wirkverbundenen Betätigungsmechanismus aufweist, wobei das Verriegelungselement in einer Schließstellung mit dem Sperrstück in Wirkverbindung bringbar ist, um einen formschlüssigen Eingriff zwischen Sperrabschnitten des ersten Verschlussteils und des zweiten Verschlussteils zu sperren.

Die WO 2010/084191 A1 beschreibt eine Verschlussvorrichtung, bei der ein Verbindungsmodul mit einem Sperrstück an ein Federverrieglungselement eines weiteren Verbindungsmoduls ansetzbar ist. Das Federverrieglungselement ist hierbei drehbar an dem weiteren Verbindungsmodul angeordnet derart, dass durch Verdrehen des Federverrieglungselements ein Öffnen der Verschlussvorrichtung gesperrt werden kann.

Die DE 10 2016 216 422 A1 beschreibt eine Verschlussvorrichtung zum Verbinden eines Behälters mit einem Rahmen eines Fahrzeugs. Ein Verschlussteil weist zwei Sperrstücke auf, die in Steckplätze eines weiteren Verschlussteils eingesetzt werden können und an den Steckplätzen über Federverriegelungselemente verrastet werden.

Aufgabe der vorliegenden Erfindung ist es, eine Verschlussvorrichtung zur Verfügung zu stellen, die einfach handhabbar ist und in einer Schließstellung einen zuverlässigen, belastbaren Halt der Verschlussteile aneinander ermöglicht.

Diese Aufgabe wird durch einen Gegenstand mit den Merkmalen des Anspruchs 1 gelöst.

Demnach ist das Verstellelement jedes Steckplatzes zwischen einer ersten Stellung und einer zweiten Stellung verstellbar an dem Gehäuseteil des ersten Verschlussteils angeordnet, wobei das Verstellelement ausgebildet ist, in der ersten Stellung ein Ansetzen des ersten Verschlussteils und des zweiten Verschlussteils zum Schließen der Verschlussvorrichtung entlang einer Schließrichtung aneinander zu ermöglichen und in der zweiten Stellung ein Bewegen des ersten Verschlussteils und des zweiten Verschlussteils entlang der Bewegungsebene relativ zueinander und dadurch ein Öffnen der Verschlussvorrichtung zu sperren.

Die Verschlussvorrichtung weist zwei Verschlussteile auf, die zum Schließen der Verschlussvorrichtung entlang der Schließrichtung aneinander ansetzbar sind. Die Verschlussvorrichtung kann hierbei als rein mechanische Verschlussvorrichtung ausgebildet sein, bei der die Verschlussteile in der Schließstellung mechanisch durch mechanischen Eingriff der Verschlussteile aneinander gehalten sind. Die Verschlussvorrichtung kann aber auch als mechanisch-magnetische Verschlussvorrichtung ausgebildet sein, bei der die Verschlussteile zum Schließen entlang der Schließrichtung magnetisch zueinander hin gezogen werden und in der Schließstellung vorzugsweise sowohl mechanisch als auch magnetisch aneinandergehalten sind.

Das erste Verschlussteil weist ein Gehäuseteil und zwei daran gebildete Steckplätze mit je zumindest einem ersten Eingriffsvorsprung auf. An beiden Steckplätzen ist jeweils ein an dem Gehäuseteil verstellbar angeordnetes Verstellelement vorgesehen. Das zweite Verschlussteil weist demgegenüber zwei Eingriffselemente mit je zumindest einem zweiten Eingriffsvorsprung auf. In der Schließstellung stehen die Eingriffsvorsprünge derart miteinander in Eingriff, dass die Verschlussteile entgegen der Schließrichtung aneinander gehalten sind.

Es wird somit eine Verschlussvorrichtung mit (zumindest) zwei Steckplätzen an dem ersten Verschlussteil bereitgestellt, sodass eine Verbindung zwischen den Verschlussteilen durch Eingriff zweier Eingriffselemente des zweiten Verschlussteils an Steckplätzen des ersten Verschlussteils erfolgt.

Hierbei ist ein jedes Verstellelement zwischen einer ersten Stellung und einer zweiten Stellung verstellbar an dem Gehäuseteil des ersten Verschlussteils angeordnet. Das Verstellelement kann beispielsweise verdrehbar an dem Gehäuseteil angeordnet sein. In der zweiten Stellung sperrt das Verstellelement eine Bewegung des ersten Verschlussteils und des zweiten Verschlussteils, sodass in der zweiten Stellung des Verstellelements die Verschlussteile nicht entlang der zur Schließrichtung senkrechten Bewegungsebene relativ zueinander bewegt werden können. In der zweiten Stellung des Verstellelements kann die Verschlussvorrichtung somit nicht geöffnet werden. Zum Öffnen der Verschlussvorrichtung muss ein jedes Verstellelement in die erste Stellung überführt werden, sodass ein Bewegen der Verschlussteile entlang der Bewegungsebene relativ zueinander ermöglicht wird. In der ersten Stellung des Verstellelements können die Verschlussteile relativ zueinander (in einer zur Schließrichtung senkrechten Ebene) bewegt werden, um die Eingriffsvorsprünge außer Eingriff voneinander zu bringen und somit die Verbindung zwischen den Verschlussteilen aufzuheben.

Die Verstellelemente sind in einer Ausgestaltung an den Steckplätzen des ersten Verschlussteils über einen Betätigungsmechanismus des ersten Verschlussteils gemeinsam und vorzugsweise synchron verstellbar. Der Betätigungsmechanismus weist ein Antriebselement, zum Beispiel in Form eines Zahnrads, auf.

Bei Betätigung des Antriebselements werden die Verstellelemente gemeinsam verstellt. In einer Ausgestaltung weist eines der Verschlussteile einen Lagerzapfen und das andere der Verschlussteile eine Eingriffsöffnung auf. In der Schließstellung greift der Lagerzapfen in die Eingriffsöffnung ein und lagert dadurch das erste Verschlussteil und das zweite Verschlussteil aneinander. Über den Eingriff des Lagerzapfen mit der Eingriffsöffnung kann hierbei eine Abstützung der Verschlussteile in einer zur Schließrichtung senkrechten Ebene bereitgestellt werden. Über den Eingriff kann zusätzlich eine drehende Lagerung der Verschlussteile aneinander hergestellt werden, sodass durch den Eingriff des Lagerzapfens in die Eingriffsöffnung die Verschlussteile um die Schließrichtung verschwenkbar zueinander gelagert sind. Zum Öffnen der Verschlussvorrichtung können die Verschlussteile beispielsweise um die durch den Lagerzapfen und die Eingriffsöffnung bereitgestellte Drehlagerung zueinander verschwenkt werden, um dadurch den zumindest einen ersten Eingriffsvorsprung des ersten Verschlussteils und den zumindest einen zweiten Eingangsvorsprung des zweiten Verschlussteils außer Eingriff voneinander zu bringen und somit die Verbindung zwischen den Verschlussteilen aufzuheben.

Das Verstellen des Verstellelements aus der ersten Stellung in die zweite Stellung kann zum Beispiel händisch durch einen Nutzer erfolgen. Beim Schließen der Verschlussvorrichtung befindet sich das Verstellelement an dem ersten Verschlussteil vorzugsweise in der ersten Stellung. Sind die Verschlussteile aneinander angesetzt worden, überführt der Nutzer ein jedes Verstellelement aus der ersten Stellung in die zweite Stellung, um dadurch die Verschlussteile zueinander zu sperren. Es ergibt sich ein zweistufiger Schließprozess, bei der die Verschlussteile durch den Nutzer zunächst aneinander angesetzt werden und, nach dem Ansetzen, das Verstellelement an dem ersten Verschlussteil verstellt wird, um die Verbindung zwischen den Verschlussteilen zu komplettieren.

Das Verstellen des Verstellelements aus der ersten Stellung in die zweite Stellung kann aber auch zum Beispiel automatisch erfolgen, indem das Verstellelement beispielsweise an dem Gehäuseteil des ersten Verschlussteils in Richtung der zweiten Stellung federvorgespannt ist und bei Ansetzen der Verschlussteile aneinander das Verstellelement so freigegeben wird, dass sich das Verstellelement selbsttätig aus der ersten Stellung in die zweite Stellung bewegt. Zum Öffnen der Verschlussvorrichtung sind, in einer Ausgestaltung, die ersten Eingriffsvorsprünge und die zweiten Eingriffsvorsprünge durch Verschwenken des ersten Verschlussteils und des zweiten Verschlussteils entlang der Bewegungsebene relativ zueinander außer Eingriff voneinander bringbar.

In anderer Ausgestaltung sind die ersten Eingriffsvorsprünge und die zweiten Eingriffsvorsprünge zum Öffnen der Verschlussvorrichtung durch Parallelverschiebung des ersten Verschlussteils und des zweiten Verschlussteils entlang der Bewegungsebene relativ zueinander außer Eingriff voneinander bringbar.

In einer Ausgestaltung ist der zumindest eine erste Eingriffsvorsprung jedes der Steckplätze an dem Verstellelement angeordnet und gemeinsam mit dem jeweiligen Verstellelement relativ zu dem Gehäuseteil verstellbar. Die Verbindung zwischen den Verschlussteilen wird somit durch Eingriff dem Eingriffsvorsprung an dem Verstellelement des ersten Verschlussteils einerseits und an dem zugeordneten Eingriffselement des zweiten Verschlussteils andererseits hergestellt. Bei Bewegen des Verstellelements an dem Gehäuseteil des ersten Verschlussteils wird der erste Eingriffsvorsprung gemeinsam mit dem Verstellelement bewegt, wobei über den Eingriff der Eingriffsvorsprünge hierbei zum Beispiel auch eine Vorspannkraft in das Eingriffselement des zweiten Verschlussteils eingeleitet werden kann.

In anderer Ausgestaltung ist aber auch möglich, dass für einen oder beide der Steckplätze der zumindest eine erste Eingriffsvorsprung an dem Gehäuseteil geformt ist und somit nicht an dem Verstellelement angeordnet ist. Durch Verstellen des jeweiligen Verstellelements kann hierbei beispielsweise bewirkt werden, dass das jeweilige Eingriffselement des zweiten Verschlussteils mit dem daran angeordneten, zumindest einen zweiten Eingangsvorsprung in Eingriff mit dem ersten Eingriffsvorsprung am Gehäuseteil des ersten Verschlussteils gebracht oder zumindest gehalten (gesichert) wird. Sind die Eingriffsvorsprünge zum Beispiel durch magnetische Wechselwirkung bereits ohne Zutun des Verstellelements in Eingriff gelangt, kann das Verstellelement mit dem Bundabschnitt das Eingriffselement zumindest so sperren, dass der Eingriff der Eingriffsvorsprünge gesichert ist.

In einer Ausgestaltung weist jedes Verstellelement eine Basis und einen starr an der Basis geformten, entlang der Schließrichtung von der Basis vorstehenden Bundabschnitt auf. Die Basis bildet einen Körper des Verstellelements aus und kann beispielsweise eine im Wesentlichen senkrecht zur Schließrichtung erstreckte Fläche bereitstellen, die beispielsweise eine Anlagefläche für das Eingriffselement des zweiten Verschlussteils in der Schließstellung bereitstellt. Der Bundabschnitt steht entlang der Schließrichtung von der Basis vor und kann zum Beispiel eine umfänglich geschlossenen oder auch umfänglich nach Art eines C-Rings geöffnete Wandung an der Basis bereitstellen, innerhalb derer das Eingriffselement des zweiten Verschlussteils in der Schließstellung aufgenommen ist.

Über den Bundabschnitt kann eine Aufnahme für das jeweils zugeordnete Eingriffselement geschaffen werden. Über den Bundabschnitt kann in der zweiten Stellung des Verstellelements zum Beispiel ein Öffnen der Verschlussvorrichtung durch eine Relativbewegung der Verschlussteile in einer zur Schließrichtung senkrechten Ebene gesperrt sein, sodass über das Verstellelement in der zweiten Stellung ein Öffnen der Verschlussvorrichtung verhindert ist und die Verschlussvorrichtung erst geöffnet werden kann, wenn das Verstellelement an dem ersten Verschlussteil zurück in die erste Stellung bewegt worden ist.

Die Eingriffselemente des zweiten Verschlussteils sind beispielsweise jeweils durch einen starren Zapfen geformt. Der zumindest eine zweite Eingriffsvorsprung steht hierbei radial von dem Zapfen vor, um in der Schließstellung durch Eingriff mit dem zumindest einen ersten Eingriffsvorsprung des ersten Verschlussteils eine Verbindung zwischen den Verschlussteilen herzustellen.

In einer Ausgestaltung ist für jedes Verstellelement der zumindest eine erste Eingriffsvorsprung an dem Bundabschnitt angeordnet. Der Eingriffsvorsprung ist hierbei vorzugsweise starr an dem Bundabschnitt geformt. Der Bundabschnitt ist dabei ebenfalls starr ausgebildet und mit der starren Basis verbunden, sodass das Verstellelement insgesamt als im Wesentlichen starres, bei bestimmungsgemäßer Belastung nicht elastisch verformbares Teil ausgebildet ist.

Der zumindest eine erste Eingriffsvorsprung steht, in einer Ausgestaltung, quer zur Schließrichtung von dem Bundabschnitt vor und ragt dabei vorzugsweise radial nach innen, um in der Schließstellung über den Eingriff mit dem zumindest einen zweiten Eingriffsvorsprung des Eingriffselements des zweiten Verschlussteils eine Verbindung zwischen den Verschlussteilen herzustellen.

Der zumindest eine erste Eingriffsvorsprung und der zumindest eine zweite Eingriffsvorsprung eines jeden Eingriffselements bilden vorzugsweise jeweils einen Hinterschnitt aus. Der Hinterschnitt wird hierbei nicht notwendigerweise durch zur Schließrichtung senkrecht gerichtet Flächen ausgebildet. Flächen des Hinterschnitts können vielmehr auch schräg zur Schließrichtung erstreckt sein. Der Hinterschnitt des jeweiligen Eingriffsvorsprungs wird dadurch ausgebildet, dass der Eingriffsvorsprung quer zur Schließrichtung vorspringt und durch Eingriff der Eingriffsvorsprünge ineinander eine Bewegung der Verschlussteile entlang der Schließrichtung gesperrt ist, sodass die Verschlussteile in der Schließstellung der Verschlussvorrichtung - gegebenenfalls unter zusätzlicher Sperrwirkung eines Sperrelements - entlang der Schließrichtung aneinandergehalten sind.

Für jedes Paar aus Verstellelement und zugeordnetem Eingriffselement stehen der zumindest eine erste Eingriffsvorsprung und der zumindest eine zweite Eingriffsvorsprung in der Schließstellung vorzugsweise formschlüssig miteinander in Eingriff. Das Halten der Verschlussteile aneinander wird somit aufgrund der Form der Eingriffsvorsprünge bewirkt. Die formschlüssige Verbindung kann hierbei allein über die Eingriffsvorsprünge hergestellt werden. In anderer Ausgestaltung kann die formschlüssige Verbindung aber auch durch Eingriff der Eingriffsvorsprünge und eine zusätzliche Sperrwirkung, zum Beispiel über das Verstellelement, bewirkt werden derart, dass die Eingriffsvorsprünge nach Aufheben der Sperrwirkung entlang der Schließrichtung voneinander abgleiten können.

In einer Ausgestaltung sind das erste Verschlussteil und das zweite Verschlussteil zum Schließen der Verschlussvorrichtung ausschließlich in der ersten Stellung des Verstellelements aneinander ansetzbar. Das Verstellelement muss somit in die erste Stellung an dem ersten Verschlussteil gebracht werden, um ein Ansetzen der Verschlussteile aneinander zu ermöglichen. Durch Überführen des Verstellelements an dem ersten Verschlussteil aus der ersten Stellung in die zweite Stellung wird die Verbindung zwischen den Verschlussteilen dann komplettiert, indem über das Verstellelement in der zweiten Stellung ein Öffnen der Verschlussvorrichtung gesperrt ist.

In anderer Ausgestaltung kann ein Ansetzen der Verschlussteile aber auch in der zweiten Stellung des Verstellelements möglich sein. In diesem Fall kann das Verstellelement beispielsweise ganz oder mit einem Abschnitt elastisch ausgebildet sein, um bei Ansetzen der Verschlussteile aneinander quer zur Schließrichtung auszuweichen und somit ein Ansetzen der Verschlussteile aneinander zu ermöglichen.

In einer Ausgestaltung ist das Verstellelement jeweils zwischen der ersten Stellung und der zweiten Stellung zu dem Gehäuseteil des ersten Verschlussteils verdrehbar. Das Verstellelement kann hierbei insbesondere um eine entlang der (parallel zur) Schließrichtung weisende Drehachse zu dem Gehäuseteil verdrehbar sein. In der ersten Stellung nimmt jedes Verstellelement eine erste Drehstellung an dem Gehäuseteil ein. In der zweiten Stellung ist das Verstellelement an dem Gehäuseteil verdreht, um in der zweiten Stellung ein Bewegen der Verschlussteile entlang der Bewegungsebene relativ zueinander und somit ein Öffnen der Verschlussvorrichtung zu sperren.

Das Verstellelement jedes der Steckplätze des ersten Verschlussteils ist an dem Gehäuseteil verstellbar. In einer Ausgestaltung dient das Verstellelement eines jeden Steckplatzes hierbei dazu, in einer zweiten Stellung eine Vorspannungskraft entlang der Schließrichtung auf das jeweils zugeordnete Eingriffselement auszuüben. In der ersten Stellung des Verstellelements ist ein Ansetzen der Verschlussteile aneinander möglich. Sind die Verschlussteile aneinander angesetzt worden, so kann das Verstellelement an dem ersten Verschlussteil verstellt werden, um dadurch eine Vorspannungskraft zwischen den Verschlussteilen zu bewirken, die entlang der Schließrichtung wirkt und somit die Verschlussteile entlang der Schließrichtung zueinander vorspannt.

Durch das Bereitstellen einer Vorspannungskraft kann ein im Wesentlichen spielfreier, klapperfreier Halt der Verschlussteile in der Schließstellung aneinander bewirkt werden. So kann dadurch, dass die Verschlussteile über die Verstellelemente in der zweiten Stellung entlang der Schließrichtung zueinander vorgespannt sind, bewirkt werden, dass ein axiales, entlang der Schließrichtung gerichtetes Spiel, das zum Beispiel durch Fertigungstoleranzen bedingt ist, ausgeglichen wird und die Verschlussteile entlang der Schließrichtung fest und im Wesentlichen spielfrei aneinandergehalten sind. Im Betrieb der Verschlussvorrichtung kann auf diese Weise der Halt der Verschlussteile aneinander verbessert sein, wobei insbesondere eine Vibrationsanfälligkeit unterdrückt sein kann.

In einer Ausgestaltung ist jedes Verstellelement axial an dem Gehäuseteil verstellbar. Das Verstellelement nimmt hierbei in der ersten Stellung eine erste Axialstellung zu dem Gehäuseteil und in der zweiten Stellung eine von der ersten Axialstellung unterschiedliche, entlang der Schließrichtung versetzte, zweite Axialstellung zu dem Gehäuseteil ein. Durch Verstellen des Verstellelements an dem Gehäuseteil wird das Verstellelement somit axial entlang der Schließrichtung an dem Gehäuseteil verstellt, um dadurch eine Vorspannung zwischen den Verschlussteilen zu bewirken. Durch axiales Verstellen des Verstellelements kann das Verstellelement beispielsweise eine Zugwirkung oder eine Druckwirkung an dem zugeordneten Eingriffselement des zweiten Verschlussteils entlang der Schließrichtung bewirken, um auf diese Weise eine Vorspannung zwischen den Verschlussteilen bereitzustellen.

Beispielsweise kann das Verstellelement eine Zugwirkung in die Schließrichtung an dem Eingriffselement bewirken. Steht zumindest ein an dem Verstellelement geformter, erster Eingriffsvorsprung mit dem zumindest einen zweiten Eingriffsvorsprung an dem Eingriffselement in Eingriff, so kann bei einer Axialverstellung des Verstellelements an dem Gehäuseteil des ersten Verschlussteils in die Schließrichtung eine Zugwirkung an dem Eingriffselement bewirkt werden, sodass das Eingriffselement (weiter) in die Schließrichtung in Eingriff mit einer zugeordneten Stecköffnung am Gehäuseteil des ersten Verschlussteils gezogen wird.

Alternativ kann eine Vorspannung auch entgegen der Schließrichtung an dem Eingriffselement bewirkt werden. Beispielsweise kann das Verstellelement eine Druckwirkung entgegen der Schließrichtung an dem Eingriffselement bewirken. Hierzu kann das Eingriffselement beispielsweise mit seiner Basis auf das Eingriffselement drücken. Wird das Eingriffselement bei einem Verstellen aus der ersten Stellung in die zweite Stellung axial entgegen der Schließrichtung an dem Gehäuseteil des ersten Verschlussteils verstellt, drückt das Eingriffselement mit seiner Basis auf das Eingriffselement und spannt dieses somit entgegen der Schließrichtung relativ zu dem Gehäuseteil vor.

In einer Ausgestaltung weist das erste Verschlussteil an jedem der Steckplätze ein an dem Gehäuseteil angeordnetes Auflaufelement mit einem ersten Rahmenabschnitt und das Verstellelement einen Auflaufabschnitt mit einem zweiten Rahmenabschnitt auf. Der erste Rahmenabschnitt gleitet bei einem Verstellen des jeweiligen Verstellelements zum axialen Verstellen des Verstellelements an dem zweiten Rahmenabschnitt. Wird das Verstellelement an dem Gehäuseteil des ersten Verschlussteils verstellt, beispielsweise verdreht, so läuft das Verstellelement somit mit seinem Auflaufabschnitt auf das Auflaufelement an dem Gehäuseteil auf, sodass dadurch eine axiale Verstellung des Verstellelements an dem Gehäuseteil bewirkt wird, um auf diese Weise bei Überführen in die zweite Stellung eine axiale Vorspannung zwischen den Verschlussteilen zu bewirken.

Das Auflaufelement ist vorzugsweise drehfest mit dem Gehäuseteil verbunden. Das Auflaufelement kann einstückig an dem Gehäuseteil geformt sein oder als separates Element an das Gehäuseteil angesetzt sein, wobei das Auflaufelement bei einem Verstellen des Verstellelements relativ zu dem Gehäuseteil aber nicht in Verstellrichtung mit bewegt wird, sondern drehfest an dem Gehäuseteil verbleibt.

In einer Ausgestaltung weisen das erste Verschlussteil und/oder das zweite Verschlussteil zumindest ein entlang der Schließrichtung elastisch verformbares Elastizitätselement auf. Beispielsweise kann an jedem Steckplatz des ersten Verschlussteils jeweils ein entlang der Schließrichtung elastisch verformbares Elastizitätselement angeordnet sein, über das das zugeordnete Auflaufelement entlang der Schließrichtung relativ zu dem Gehäuseteil abgestützt ist. Das Elastizitätselement wird hierbei bei einem Verstellen des zugeordneten Verstellelements elastisch verspannt, sodass dadurch eine elastische Vorspannkraft zwischen den Verschlussteilen bewirkt wird. Durch Überführen in die zweite Stellung kann das Verstellelement das jeweils zugeordnete Eingriffselement des zweiten Verschlussteils beispielsweise in die Schließrichtung in Richtung eines Eingriffs mit einem Steckplatz an dem ersten Verschlussteil belasten, wodurch das Elastizitätselement elastisch verformt wird und somit verspannt wird und dadurch eine elastische Vorspannkraft zwischen den Verschlussteilen bereitgestellt wird.

Das Elastizitätselement kann beispielsweise durch ein aus einem elastomeren Material geformtes Element, zum Beispiel in Form eines O-Rings ausgebildet sein. In anderer Ausgestaltung kann das Elastizitätselement zum Beispiel durch ein mechanisches Federelement, zum Beispiel hergestellt aus einem Federstahl oder einem Kunststoffmaterial, gebildet sein, zum Beispiel als Tellerfeder.

Das Elastizitätselement kann als gesondertes Element oder kann einstückig mit dem Auflaufelement oder dem Gehäuseteil oder auch mit einem Gehäuse des zweiten Verschlussteils ausgebildet sein.

In einer Ausgestaltung weist das erste Verschlussteil ein Betätigungselement auf, das betätigbar ist, um das Verstellelement zwischen der ersten Stellung und der zweiten Stellung zu verstellen. Das Betätigungselement kann beispielsweise linear entlang der Betätigungsrichtung zu dem Gehäuseteil bewegbar sein und ist somit nach Art eines Schiebers oder Drückers ausgebildet, der linear durch einen Nutzer verstellt werden kann. Über das Betätigungselement kann ein Verstellen des Verstellelements an dem Gehäuseteil bewirkt werden, indem ein Nutzer das Betätigungselement händisch betätigt und dadurch nach Ansetzen der Verschlussteile aneinander das Verstellelement aus der ersten Stellung in die zweite Stellung oder umgekehrt zum Lösen der Verschlussvorrichtung das Verstellelement aus der zweiten Stellung in die erste Stellung überführt.

Das erste Verschlussteil weist ein mit dem Verstellelement jedes Steckplatzes wirkverbundenes Antriebselement auf, das ausgebildet ist, bei Betätigung eine Verstellkraft in das Verstellelement einzuleiten. Das Antriebselement kann zusätzlich zu dem Betätigungselement vorgesehen sein. Das Antriebselement kann aber auch ohne ein zusätzliches Betätigungselement vorgesehen und durch einen Nutzer zum Beispiel händisch zu betätigen sein, indem ein Nutzer an dem Antriebselement angreifen kann, um dadurch eine Verstellkraft in das Verstellelement einzuleiten, insbesondere um das Verstellelement aus der ersten Stellung in die zweite Stellung oder umgekehrt aus der zweiten Stellung in die erste Stellung zu überführen.

Das Antriebselement kann beispielsweise drehbar an dem Gehäuseteil des ersten Verschlussteils angeordnet sein. Das Antriebselement kann beispielsweise nach Art eines Zahnrads ausgebildet sein, das mit dem Verstellelement in Verzahnungseingriff steht, sodass eine Drehbewegung des Antriebselements in das Verstellelement eingeleitet wird und dadurch das Verstellelement zwischen der ersten Stellung und der zweiten Stellung bewegt wird.

In einer Ausgestaltung weist das Antriebselement einen ersten Verzahnungsabschnitt auf, der mit einem Verzahnungsabschnitt des Betätigungselements in Verzahnungseingriff steht. In diesem Fall ist somit ein zusätzliches Betätigungselement vorgesehen, das betätigt werden kann, um das Antriebselement zu verstellen. Das Betätigungselement steht mit dem Antriebselement in Verzahnungseingriff, sodass bei einer (linearen) Bewegung des Betätigungselements das Antriebselement an dem Gehäuseteil verdreht wird.

In einer Ausgestaltung weist das Antriebselement - zusätzlich oder alternativ zu dem ersten Verzahnungsabschnitt - einen zweiten Verzahnungsabschnitt auf, der mit einem Verzahnungsabschnitt des Verstellelements in Verzahnungseingriff steht. Eine Verstellkraft wird somit über den Verzahnungseingriff des zweiten Verzahnungsabschnitts mit dem Verzahnungsabschnitt des Verstellelements in das Verstellelement eingeleitet, sodass bei einer (Dreh-)Bewegung des Antriebselements das Verstellelement an dem Gehäuseteil verstellt wird.

An dem Betätigungselement und/oder an dem Antriebselement kann eine Zustandsanzeige angeordnet sein, die einem Nutzer anzeigt, in welcher Stellung sich das Verstellelement befindet. Anhand der Zustandsanzeige kann ein Nutzer somit unmittelbar erkennen, ob das Verstellelement aus der ersten Stellung in die zweite Stellung zum Schließen der Verschlussvorrichtung überführt worden ist und das Schließen der Verschlussvorrichtung somit komplettiert worden ist. Die Zustandsanzeige kann beispielsweise durch eine farbliche oder eine andere Markierung an dem Betätigungselement oder dem Antriebselement vorgesehen sein.

Beispielsweise kann einem Nutzer bei einer Stellung des Betätigungselements, die der ersten Stellung des Verstellelements zugeordnet ist, eine farbliche (z.B. rote) Markierung angezeigt werden. Nach Betätigung des Betätigungselements zum Überführen des Verstellelements in die zweite Stellung ist die Markierung demgegenüber nicht mehr sichtbar, sodass ein Nutzer unmittelbar erkennen kann, dass das Schließen der Verschlussvorrichtung richtig erfolgt und abgeschlossen ist.

In einer Ausgestaltung weist das Gehäuseteil an jedem Steckplatz je eine Stecköffnung auf, in die je eines der Eingriffselemente des zweiten Verschlussteils entlang der Schließrichtung zum Schließen der Verschlussvorrichtung eingesetzt werden kann. Die Stecköffnung definiert einen Steckplatz zum Aufnehmen des jeweiligen Eingriffselements des zweiten Verschlussteils. Bei Ansetzen der Verschlussteile aneinander gelangen die Eingriffselemente des zweiten Verschlussteils in Eingriff mit den Stecköffnungen am Gehäuseteil des ersten Verschlussteils, wodurch die Eingriffsvorsprünge miteinander in Eingriff gelangen und somit eine Verbindung zwischen den Verschlussteilen hergestellt wird.

Das Schließen der Verschlussvorrichtung erfolgt grundsätzlich durch Ansetzen der Verschlussteile entlang der Schließrichtung aneinander, wobei ein Ansetzen der Verschlussteile auch in einer von der Schließrichtung abweichenden Richtung, zum Beispiel entlang einer zur Schließrichtung schräg erstreckten Richtung, möglich sein kann. Bei magnetisch ausgebildeter Verschlussvorrichtung wirkt eine magnetische Anziehungskraft zwischen den Verschlussteilen im Wesentlichen entlang der Schließrichtung, sodass die Verschlussteile entlang der Schließrichtung zueinander hin gezogen werden.

In einer Ausgestaltung ist jede Stecköffnung durch eine Ausgangsöffnung in eine quer zur Schließrichtung gerichtete Öffnungsrichtung geöffnet. Die Eingriffselemente sind hierbei in der ersten Stellung des Verstellelements in die Öffnungsrichtung zum Öffnen der Verschlussvorrichtung aus den Stecköffnungen heraus bewegbar. In der zweiten Stellung versperrt das Verstellelement demgegenüber, in einer Ausgestaltung, die Ausgangsöffnung des zugeordneten Steckplatzes derart, dass das zugeordnete Eingriffselement nicht in die Öffnungsrichtung zum Öffnen der Verschlussvorrichtung aus der Stecköffnung bewegbar ist.

Das Öffnen der Verschlussvorrichtung erfolgt durch Relativbewegung der Verschlussteile in einer zur Schließrichtung senkrechten Ebene, beispielsweise durch Verschieben oder Verdrehen der Verschlussteile relativ zueinander. Das Verstellelement dient hierbei beispielsweise dazu, die Ausgangsöffnung des zugeordneten Steckplatzes zu sperren, wenn sich das Verstellelement in der zweiten Stellung an dem Gehäuseteil des ersten Verschlussteils befindet, sodass bei in der zweiten Stellung befindlichem Verstellelement die Verschlussvorrichtung nicht geöffnet werden kann. Erst wenn ein Nutzer das (jedes) Verstellelement aus der zweiten Stellung in die erste Stellung überführt, kann die Verbindung zwischen den Verschlussteilen aufgehoben werden, indem die Eingriffselemente des zweiten Verschlussteils in die quer zur Schließrichtung gerichtete Öffnungsrichtung aus den Stecköffnungen des ersten Verschlussteils heraus bewegt werden.

Die Ausgangsöffnungen können die Stecköffnungen in einer Ausgestaltung in unterschiedliche Richtungen, insbesondere in entgegengesetzte Richtungen öffnen, sodass eins der Eingriffselemente in eine erste Richtung aus der zugeordneten Stecköffnung und das andere der Eingriffselemente in eine entgegengesetzte, zweite Richtung aus der anderen Stecköffnung zu entfernen ist, um die Verschlussvorrichtung zu öffnen. Durch eine solche Orientierung der Ausgangsöffnungen kann ein Öffnen der Verschlussvorrichtung beispielsweise durch Verdrehen der Verschlussteile um eine zentrale Drehachse relativ zueinander ermöglicht werden.

Die Ausgangsöffnungen können die Stecköffnungen aber alternativ auch in die gleiche Richtung öffnen, sodass die Eingriffselemente parallel zueinander in eine gemeinsame Öffnungsrichtung aus den zugeordneten Stecköffnungen geschoben werden können. In diesem Fall werden zum Öffnen der Verschlussvorrichtung die Verschlussteile somit parallel zueinander verschoben (und nicht zueinander verdreht).

Die Verschlussvorrichtung kann als rein mechanische Verschlussvorrichtung ausgebildet sein. Die Verschlussvorrichtung kann aber auch als mechanisch-magnetische Verschlussvorrichtung mit magnetischen Elementen ausgestaltet sein.

In einer Ausgestaltung weist das erste Verschlussteil ein erstes magnetisches Element und das zweite Verschlussteil ein zweites magnetisches Element auf, wobei das erste magnetisches Element und das zweite magnetisches Element magnetisch anziehend zusammenwirken, um das Ansetzen des ersten Verschlussteils und des zweiten Verschlussteils zum Schließen der Verschlussvorrichtung entlang der Schließrichtung magnetisch zu unterstützen. Die magnetischen Elemente wirken magnetisch anziehend entlang der Schließrichtung und ziehen die Verschlussteile beim Ansetzen somit entlang der Schließrichtung zueinander hin, sodass das Schließen der Verschlussvorrichtung magnetisch unterstützt wird.

Die magnetischen Elemente der Verschlussteile können jeweils durch einen Permanentmagneten ausgebildet sein. Alternativ kann eins der magnetischen Elemente durch einen Permanentmagneten und das andere der magnetischen Elemente durch einen ferromagnetischen Anker ausgebildet sein.

Magnetische Elemente des ersten Verschlussteils können an dem Gehäuseteil oder an den Verstellelementen der Steckplätze angeordnet sein. Magnetische Elemente des zweiten Verschlussteils können beispielsweise an den Eingriffselementen des zweiten Verschlussteils angeordnet sein.

In einer Ausgestaltung weisen das erste Verschlussteil eine erste elektrische Kontaktanordnung und das zweite Verschlussteil eine zweite elektrische Kontaktanordnung auf. Die erste elektrische Kontaktanordnung und die zweite elektrische Kontaktanordnung sind in der Schließstellung elektrisch kontaktierend miteinander in Wirkverbindung, sodass eine elektrische Verbindung zwischen den Kontaktanordnungen hergestellt ist, wenn sich die Verschlussvorrichtung in ihrer Schließstellung befindet.

Eine jede Kontaktanordnung kann einen, zwei oder mehr elektrische Kontakte aufweisen, zum Beispiel drei Kontakte, vier Kontakte oder sieben Kontakte oder auch eine andere Anzahl von Kontakten. Die Verschlussvorrichtung wirkt somit als elektrische Verschlussvorrichtung, über die in der Schließstellung eine elektrische Verbindung zwischen den zugeordneten Baugruppen hergestellt wird.

Die Verschlussvorrichtung kann zum Verbinden von zwei Baugruppen eines Fahrzeugs, zum Beispiel eines Kraftfahrzeugs oder eines Fahrrads, beispielsweise eines elektrischen Fahrrads (E-Bike), dienen.

Die Verschlussvorrichtung kann in einer Ausgestaltung zum Verbinden einer elektrischen Baugruppe mit einem elektrischen Fahrrad (E-Bike) ausgestaltet sein. Beispielsweise kann über die Verschlussvorrichtung eine Batteriebaugruppe, zum Beispiel in Form eines sogenannten Range Extenders, mit einem Fahrradrahmen eines Fahrrads verbunden werden.

Ein Fahrrad weist in einer Ausgestaltung eine Verschlussvorrichtung der vorangehend beschriebenen Art auf, wobei die Verschlussvorrichtung zum Verbinden einer Baugruppe mit einem Fahrradrahmen ausgestaltet ist. Die Baugruppe kann beispielsweise durch eine Batteriebaugruppe ausgestaltet sein.

Auch andere Anwendungen sind denkbar. Beispielsweise kann bei Verwendung der Verschlussvorrichtung an einem Fahrrad eine beliebige Baugruppe, zum Beispiel eine Schlossbaugruppe, ein Behälter, eine Trinkflasche oder ein Gepäckstück über die Verschlussvorrichtung mit einem Fahrradrahmen, einem Fahrradlenker oder einem Fahrradgepäckträger verbunden werden.

Der der Erfindung zugrunde liegende Gedanke soll nachfolgend anhand der in Figuren dargestellten Ausführungsbeispiele näher erläutert werden. Es zeigen:
- Fig. 1: eine perspektivische Explosionsansicht eines Ausführungsbeispiels einer Verschlussvorrichtung mit einem ersten Verschlussteil und einem entlang einer Schließrichtung mit dem ersten Verschlussteil verbindbaren, zweiten Verschlussteil;
- Fig. 2: eine andere Explosionsansicht der Verschlussvorrichtung;
- Fig. 3A: eine perspektivische Ansicht der Verschlussvorrichtung vor dem Schließen;
- Fig. 3B: eine frontale Ansicht der Anordnung gemäß Fig. 3A;
- Fig. 3C: eine Draufsicht auf die Anordnung gemäß Fig. 3A;
- Fig. 3D: eine Schnittansicht entlang der Linie A-A gemäß Fig. 3C;
- Fig. 3E: eine Seitenansicht der Anordnung gemäß Fig. 3A;
- Fig. 3F: eine Schnittansicht entlang der Linie B-B gemäß Fig. 3E;
- Fig. 3G: eine Draufsicht auf das erste Verschlussteil der Verschlussvorrichtung, in der Stellung gemäß Fig. 3A;
- Fig. 3H: eine Ansicht des ersten Verschlussteils von unten;
- Fig. 4A: eine perspektivische Ansicht der Verschlussvorrichtung beim Schließen;
- Fig. 4B: eine frontale Ansicht der Anordnung gemäß Fig. 4A;
- Fig. 4C: eine Draufsicht auf die Anordnung gemäß Fig. 4A;
- Fig. 4D: eine Seitenansicht der Anordnung gemäß Fig. 4A;
- Fig. 4E: eine Schnittansicht entlang der Linie A-A gemäß Fig. 4D;
- Fig. 4F: eine Schnittansicht entlang der Linie B-B gemäß Fig. 4D;
- Fig. 5A: eine perspektivische Ansicht der Verschlussvorrichtung, beim weiteren Schließen;
- Fig. 5B: eine frontale Ansicht der Anordnung gemäß Fig. 5A;
- Fig. 5C: eine Draufsicht auf die Anordnung gemäß Fig. 5A;
- Fig. 5D: eine Seitenansicht der Anordnung gemäß Fig. 5A;
- Fig. 5E: eine Schnittansicht entlang der Linie A-A gemäß Fig. 4D;
- Fig. 6A: eine perspektivische Ansicht der Verschlussvorrichtung, bei Betätigung von Verstellelementen des ersten Verschlussteils;
- Fig. 6B: eine frontale Ansicht der Anordnung gemäß Fig. 6A;
- Fig. 6C: eine Draufsicht auf die Anordnung gemäß Fig. 6A;
- Fig. 6D: eine Seitenansicht der Anordnung gemäß Fig. 6A;
- Fig. 6E: eine Draufsicht auf das erste Verschlussteil der Verschlussvorrichtung, in der Stellung gemäß Fig. 6A;
- Fig. 6F: eine Ansicht des ersten Verschlussteils von unten;
- Fig. 6G: eine Draufsicht auf die Anordnung gemäß Fig. 6A;
- Fig. 6H: eine Schnittansicht entlang der Linie A-A gemäß Fig. 6G;
- Fig. 7A: eine perspektivische Ansicht der Verschlussvorrichtung, in einer Schließstellung nach erfolgter Betätigung der Verstellelemente des ersten Verschlussteils;
- Fig. 7B: eine frontale Ansicht der Anordnung gemäß Fig. 7A;
- Fig. 7C: eine Draufsicht auf die Anordnung gemäß Fig. 7A;
- Fig. 7D: eine Schnittansicht entlang der Linie A-A gemäß Fig. 7C;
- Fig. 7E: eine Draufsicht auf das erste Verschlussteil;
- Fig. 8A: eine Ansicht eines Auflaufelements des ersten Verschlussteils;
- Fig. 8B, 8C: perspektivische Ansichten des Auflaufelements;
- Fig. 9A, 9B: Seitenansichten des Auflaufelements;
- Fig. 10: eine Draufsicht auf das Auflaufelement;
- Fig. 11: eine Ansicht des ersten Verschlussteils von unten, mit daran angeordneten Auflaufelementen;
- Fig. 12A-12D: Seitenansichten eines Verstellelements an einem zugeordneten Auflaufelement, betrachtet aus vier unterschiedlichen, jeweils um 90° zueinander versetzten Raumrichtungen;
- Fig. 13A-13D: die Ansichten gemäß Fig. 12A bis 12D, bei einer Drehbewegung des Verstellelements relativ zu dem Auflaufelement;
- Fig. 14A-14D: die Ansichten gemäß Fig. 13A bis 13D, bei weiterem Verdrehen des Verstellelements relativ zu dem zugeordneten Auflaufelement;
- Fig. 15A, 15B: perspektivische Ansichten eines Ausführungsbeispiels mit an einem ersten Verschlussteil und einem zweiten Verschlussteil angeordneten elektrischen Kontaktanordnungen;
- Fig. 15C: eine Draufsicht auf das Gehäuseteil des ersten Verschlussteils mit einer daran angeordneten elektrischen Kontaktanordnung;
- Fig. 15D: eine Schnittansicht Linie A-A gemäß Fig. 15C;
- Fig. 16: eine Ansicht eines anderen Ausführungsbeispiels einer Kontaktanordnung des ersten Verschlussteils;
- Fig. 17: an Ansicht eines wiederum anderen Ausführungsbeispiels einer Kontaktanordnung des ersten Verschlussteils;
- Fig. 18A: eine Ansicht eines Ausführungsbeispiels einer Verschlussvorrichtung mit einem ersten Verschlussteil, das zur gleichen Seite geöffnete Stecköffnungen aufweist, in einer nicht betätigten Stellung eines Betätigungselements;
- Fig. 18B: die Anordnung gemäß Fig. 18A, in einer betätigten Stellung des Betätigungselements; und
- Fig. 19: eine Ansicht eines zugeordneten zweiten Verschlussteils.

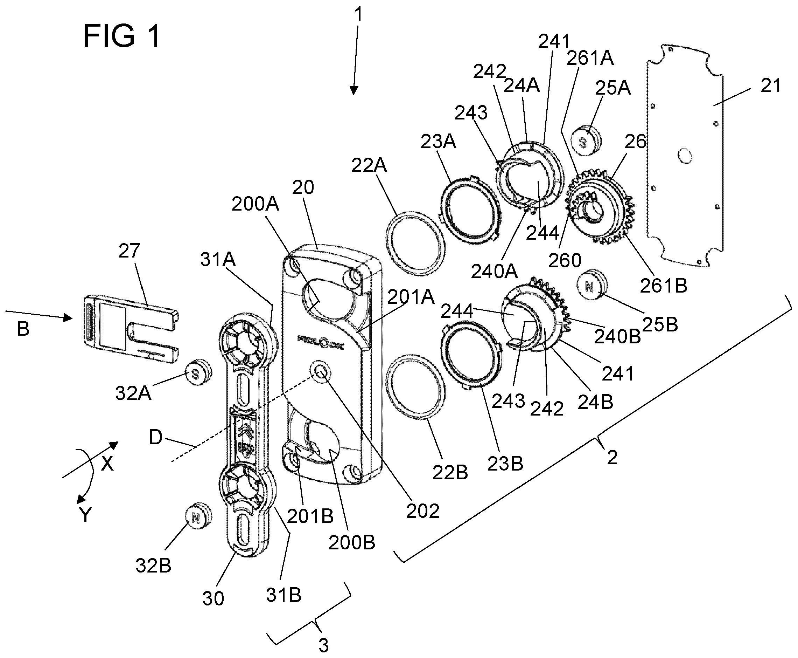

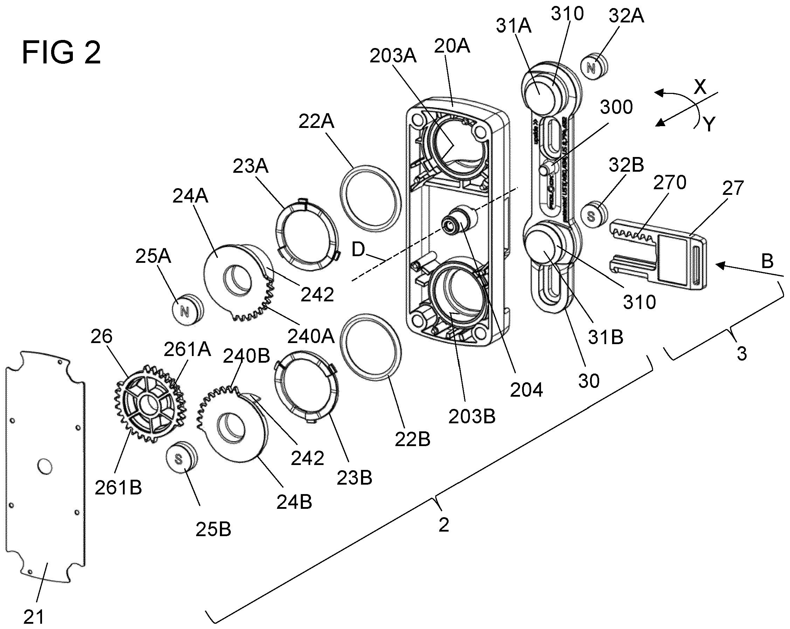

Fig. 1 und 2 zeigen ein Ausführungsbeispiel einer Verschlussvorrichtung 1, die zwei Verschlussteile 2, 3 aufweist, die entlang einer Schließrichtung X aneinander angesetzt werden können und in einer Schließstellung der Verschlussvorrichtung 1 so miteinander verbunden sind, dass die Verschlussteile 2, 3 entlang der Schließrichtung X zueinander festgelegt sind und insbesondere nicht entgegen der Schließrichtung X ohne weiteres, zumindest nicht ohne Lösen der Verbindung voneinander abgenommen werden können.

Ein erstes Verschlussteil 2 weist ein Gehäuseteil 20 auf, das Stecköffnungen 200A, 200B zum Einstecken von an einem Gehäuse 30 geformten Eingriffselementen 31A, 31B eines zweiten Verschlussteils 3 ausbildet. Die Eingriffselemente 31A, 31B können entlang der Steckrichtung X in die Stecköffnungen 200A, 200B eingesteckt werden, um auf diese Weise die Verschlussteile 2, 3 miteinander zu verbinden.

Innerhalb des Gehäuseteils 20 sind Verstellelemente 24A, 24B jeweils in einer Lageröffnung 203A, 203B drehbar gelagert. Die Verstellelemente 24A, 24B des ersten Verschlussteils 2 sind jeweils durch eine Basis 244 gebildet, von der ein starrer Bundabschnitt 242 entlang der Schließrichtung X vorsteht. An dem Bundabschnitt 242 ist jeweils ein Eingriffsvorsprung 243 geformt, der von dem (starren) Bundabschnitt 242 radial nach innen vorsteht.

Der Bundabschnitt 242 eines jeden Verstellelements 24A, 24B bildet eine Aufnahme zum Aufnehmen eines zugeordneten Eingriffselements 31A, 31B des zweiten Verschlussteils 3 aus und weist eine C-Form auf, die sich halbkreisförmig an der Basis 244 erstreckt. Die Basis 244 bildet hierbei eine Anlagefläche aus, mit der das jeweils zugeordnete Eingriffselement 31A, 31B des zweiten Verschlussteils 3 in einer Schließstellung der Verschlussvorrichtung 1 in Anlage gelangen kann.

Die Verstellelemente 24A, 24B sind jeweils drehbar in der zugeordneten Lageröffnung 203A, 203B des Gehäuseteils 20 gelagert und somit zu dem Gehäuseteil 20 verdrehbar. Wie nachfolgend noch erläutert werden soll, sind die Verstellelemente 24A, 24B zwischen einer ersten Stellung und einer zweiten Stellung an dem Gehäuseteil 20 verstellbar. In der ersten Stellung der Verstellelemente 24A, 24B kann das zweite Verschlussteil 3 mit den Eingriffselementen 31A, 31B in die Stecköffnungen 200A, 200B eingesteckt werden, sodass die Verschlussteile 2, 3 miteinander verbunden werden können. In der zweiten Stellung sperren die Verstellelemente 24A, 24B ein Öffnen der Verschlussvorrichtung 2, 3.

Bei dem dargestellten Ausführungsbeispiel ist an dem Gehäuse 30 des zweiten Verschlussteils 3 ein Lagerzapfen 300 geformt, der bei Ansetzen der Verschlussteile 2, 3 aneinander mit einer Eingriffsöffnung 202 am Gehäuseteil 20 des ersten Verschlussteils 2 in Eingriff gelangt. Über den Eingriff des Lagerzapfens 300 in die Eingriffsöffnung 202 sind die Verschlussteile 2, 3 um eine Drehachse D schwenkbar zueinander gelagert, wenn die Verschlussteile 2, 3 aneinander angesetzt sind.

Die Eingriffselemente 31A, 31B können jeweils in die Schließrichtung X in die zugeordneten Stecköffnungen 200A, 200B eingesetzt werden. Die Stecköffnungen 200A, 200B sind hierbei jeweils über eine Ausgangsöffnung 201A, 201B seitlich in einer zur Schließrichtung X senkrechten Bewegungsebene geöffnet, sodass durch Verschwenken der Verschlussteile 2, 3 in eine um die Schließrichtung X weisende Öffnungsrichtung Y relativ zueinander die Eingriffselemente 31A, 31B durch die Ausgangsöffnungen 201A, 201B aus den Stecköffnungen 200A, 200B heraus bewegt werden können, um auf diese Weise die Verschlussteile 2, 3 zum Öffnen der Verschlussvorrichtung 1 voneinander zu lösen.

Wie dies beispielsweise aus Fig. 2 ersichtlich ist, sind die Eingriffselemente 31A, 31B als Zapfen an dem Gehäuse 30 des zweiten Verschlussteils 3 geformt. An einem Schaftabschnitt 311 ist hierbei ein umfänglich umlaufender Eingriffsvorsprung 310 geformt, der in geschlossener Stellung der Verschlussvorrichtung 1 mit dem Eingriffsvorsprung 243 des zugeordneten Verstellelements 24A, 24B des ersten Verschlussteils 2 in Eingriff steht, sodass die Verschlussteile 2, 3 über den Eingriff formschlüssig entlang der Schließrichtung X aneinander gehalten sind.

An einem Lagerelement 204 des Gehäuseteils 20 des ersten Verschlussteils 2 (das in seinem Inneren die Eingriffsöffnung 202 ausbildet) ist ein Antriebselement 26 drehbar gelagert, das Verzahnungsabschnitte 261A, 261B aufweist, die mit Verzahnungsabschnitten 240A, 240B der Verstellelemente 24A, 24B in Verzahnungseingriff stehen. Durch Verdrehen des Antriebselements 26 können somit die Verstellelemente 24A, 24B gemeinsam und vorzugsweise synchron an dem Gehäuseteil 20 verstellt werden.

An dem Gehäuseteil 20 ist ein Betätigungselement 27 in Form eines Drückers entlang einer Betätigungsrichtung B linear verschiebbar angeordnet. Das Betätigungselement 27 weist einen Verzahnungsabschnitt 270 auf, der mit einem zugeordneten Verzahnungsabschnitt 260 des Antriebselements 26 in Verzahnungseingriff steht. Über den nach Art einer Zahnstange ausgebildeten Verzahnungsabschnitt 270 wird eine lineare Bewegung des Betätigungselements 27 umgesetzt in eine Drehbewegung des Antriebselements 26, sodass darüber die Verstellelemente 24A, 24B an dem Gehäuseteil 20 verstellt werden können.

Das Betätigungselement 27 kann durch einen Nutzer händisch betätigt werden. Insbesondere können die Verstellelemente 24A, 24B durch Eindrücken des Betätigungselements 27 in die Betätigungsrichtung B in das Gehäuseteil 20 hinein aus ihrer ersten Stellung, in der ein Ansetzen der Verschlussteile 2, 3 aneinander möglich ist, in eine zweite Stellung überführt werden, in der die Verbindung der Verschlussteile 2, 3 miteinander gesperrt ist und die Verschlussteile 2, 3 insbesondere nicht um die Drehachse D zum Öffnen der Verschlussvorrichtung 1 zueinander verschwenkt werden können.

An dem Gehäuseteil 20 sind Auflaufelemente 23A, 23B drehfest angeordnet und axial entlang der Schließrichtung X über Elastizitätselemente 22A, 22B in Form von elastisch verformbaren Ringelementen an dem Gehäuseteil 20 abgestützt. Die Auflaufelemente 23A, 23B sind jeweils in Anlage mit einem Auflaufabschnitt 241 an dem jeweils zugeordneten Verstellelement 24A, 24B, sodass bei einem Verdrehen des jeweiligen Verstellelements 24A, 24B der Auflaufabschnitt 241 des Verstellelements 24A, 24B an dem Auflaufelement 23A, 23B gleitet.

An einem jeden Auflaufelement 23A, 23B und dem jeweils zugeordneten Auflaufabschnitt 241 sind Rampenabschnitte 232, 245 geformt, die bei einem Verdrehen des Verstellelements 24A, 24B aneinander gleiten und somit eine axiale Positionsänderung des jeweiligen Verstellelements 24A, 24B entlang der Schließrichtung X relativ zu dem Gehäuseteil 20 bewirken. In Zusammenwirken mit dem jeweiligen Elastizitätselement 22A, 22B werden auf diese Weise die Verstellelemente 24A, 24B verstellt und bewirken eine elastische Vorspannung an den Eingriffselementen 31A, 31B, sodass die Verschlussteile 2, 3 elastisch zueinander vorgespannt und somit spielfrei und klapperfrei unter Ausgleich von Fertigungs- und Montagetoleranzen zueinander festgelegt werden.

Das erste Verschlussteil 2 weist magnetische Elemente 25A, 25B auf, die an den Verstellelementen 24A, 24B angeordnet sind. An dem zweiten Verschlussteil 3 sind magnetische Elemente 32A, 32B an den Eingriffselementen 31A, 31B angeordnet. Die magnetischen Elemente 25A, 25B, 32A, 32B wirken magnetisch anziehend zusammen und unterstützen auf diese Weise das Ansetzen der Verschlussteile 2, 3 entlang der Schließrichtung X aneinander.

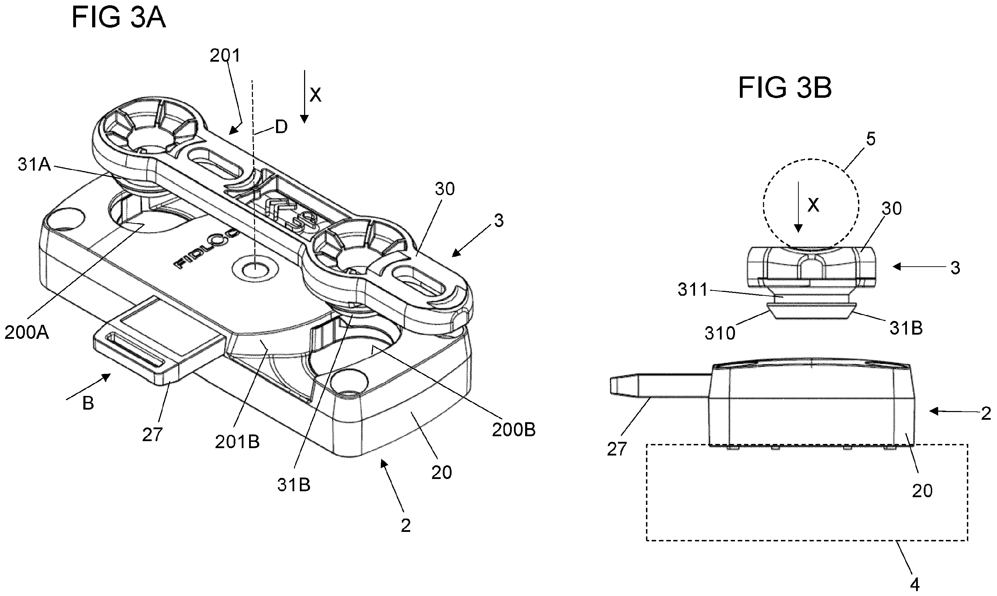

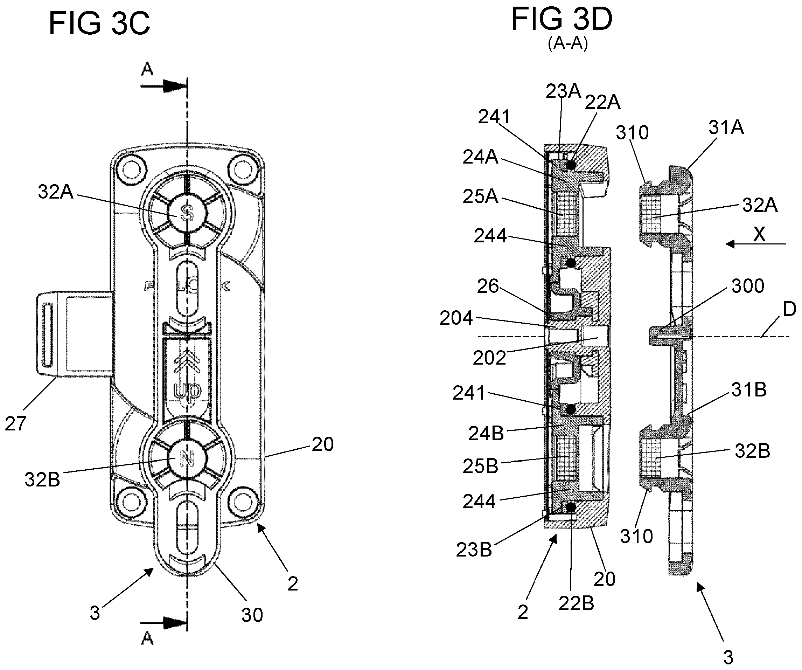

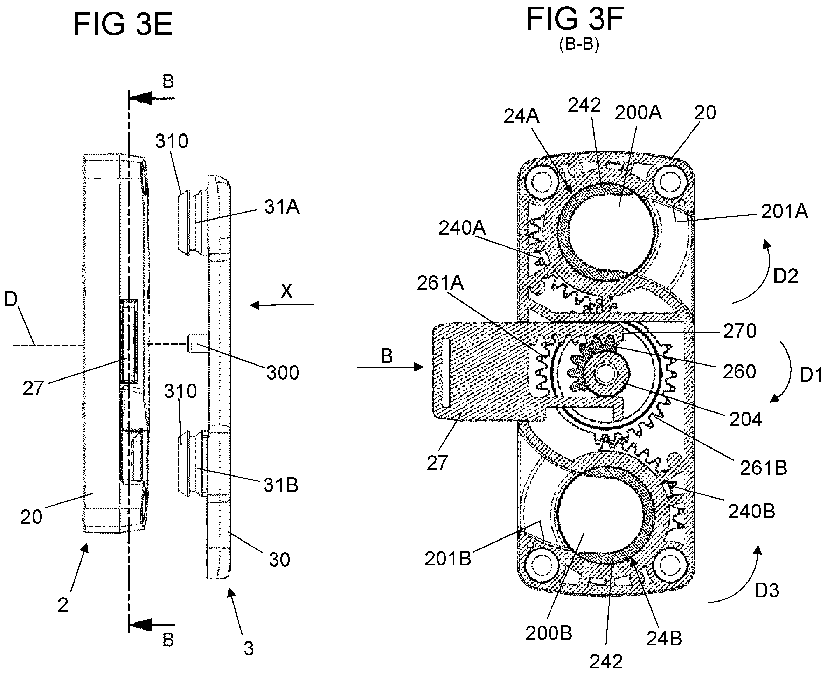

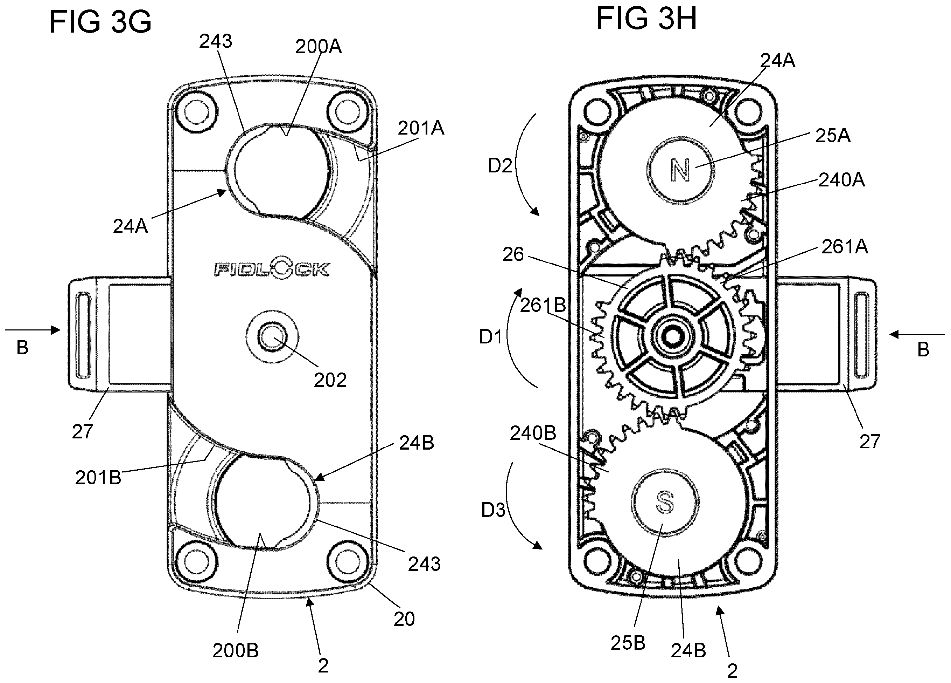

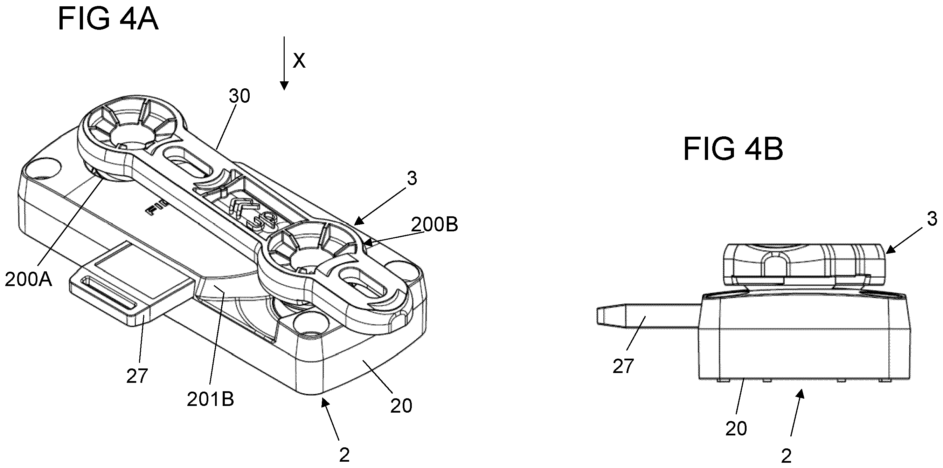

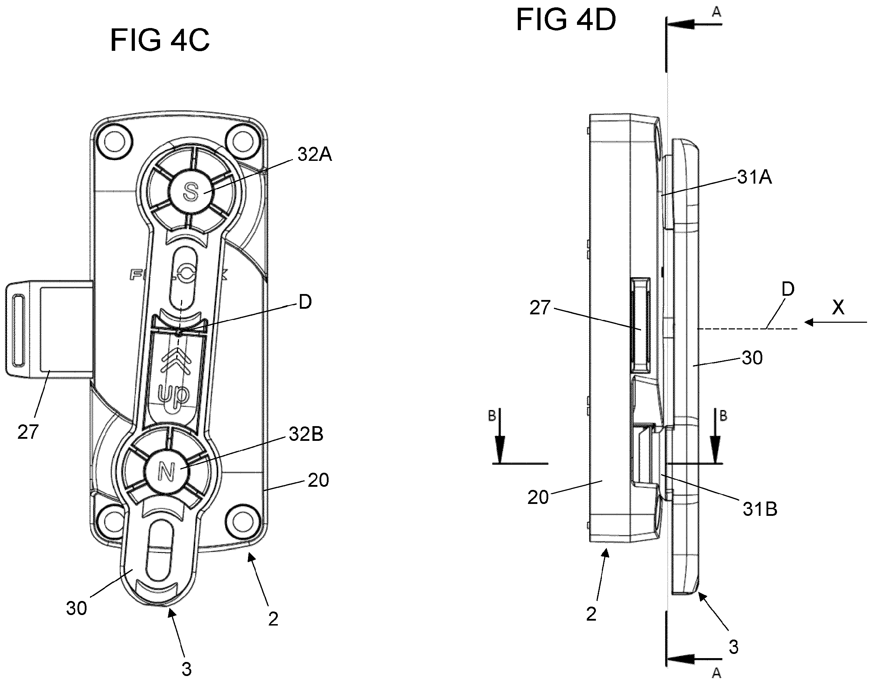

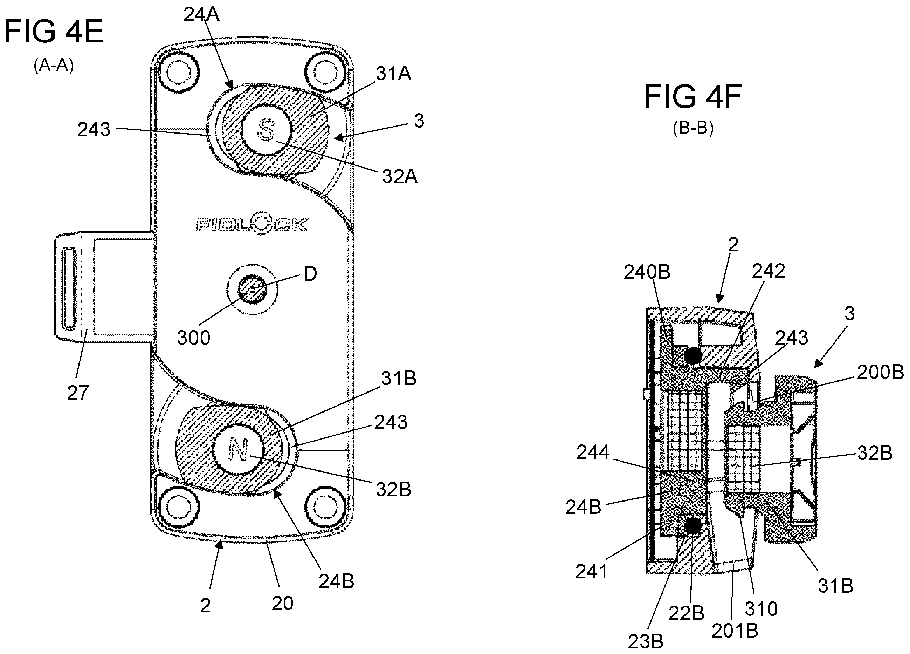

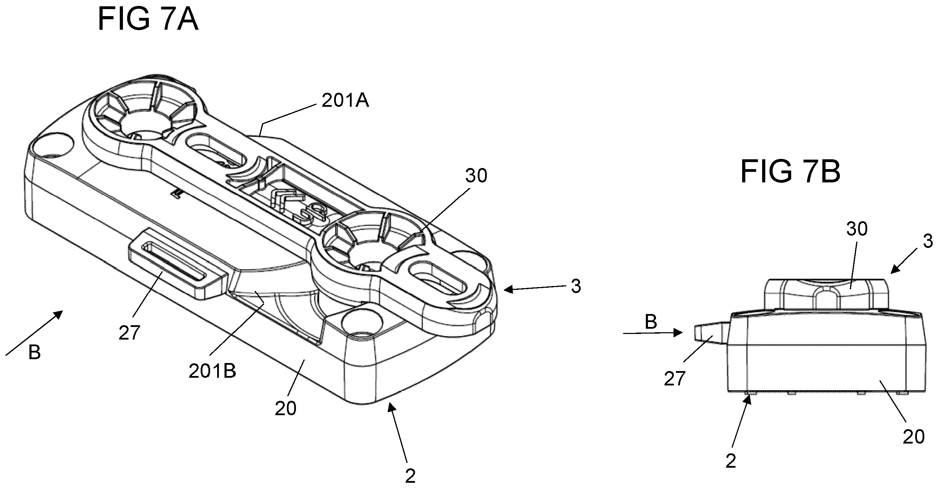

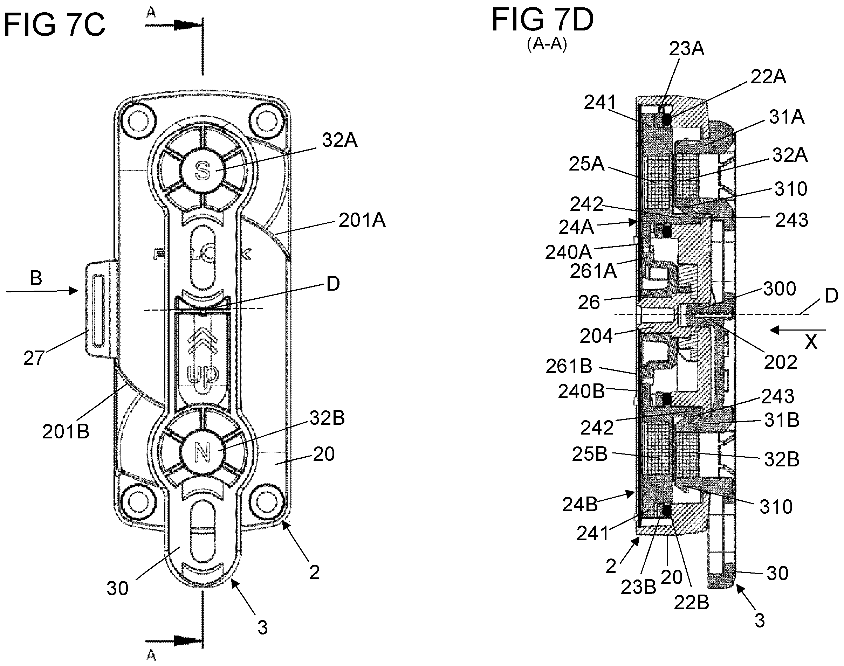

Fig. 3A-3H, Fig. 4A-4F, Fig. 5A-5E, Fig. 6A-6H und Fig. 7A-7E zeigen die Verschlussvorrichtung 1 in unterschiedlichen Stellungen vor dem Schließen (Fig. 3A-3H), beim Schließen (Fig. 4A-4F, Fig. 5A-5E und Fig. 6A-6H) und in der Schließstellung (Fig. 7A-7E).

Zum Schließen der Verschlussvorrichtung 1 werden die Verschlussteile 2, 3 entlang der Schließrichtung X aneinander angesetzt. Wie dies schematisch in Fig. 3B dargestellt ist, sind die Verschlussteile 2, 3 hierbei unterschiedlichen Baugruppen 4, 5 zugeordnet, sodass durch Verbinden der Verschlussteile 2, 3 die Baugruppen 4, 5 miteinander verbunden werden können.

Entscheidend zum Verbinden ist hierbei eine Relativbewegung zwischen den Verschlussteilen 2, 3. Wesentlich ist hingegen nicht, ob eins der Verschlussteile 2, 3 beim Schließvorgang stationär verbleibt und lediglich das andere Verschlussteil 3, 2 bewegt wird oder ob beide Verschlussteile 2, 3 aufeinander zu bewegt werden.

Beispielsweise kann das Verschlussteil 3 stationär an einer zugeordneten Baugruppe 5, zum Beispiel einem Fahrradrahmen, festgelegt sein, sodass durch Ansetzen des anderen Verschlussteils 2 die zugeordnete Baugruppe 4 an der Baugruppe 5 festgelegt werden kann.

Zum Schließen der Verschlussvorrichtung 1 werden die Eingriffselemente 31A, 31B in die zugeordneten Stecköffnungen 200A, 200B des Gehäuseteils 20 des Verschlussteils 2 entlang der Schließrichtung X eingeführt, wie dies aus Fig. 3A-3H ersichtlich ist. Die Verstellelemente 24A, 24B befinden sich hierbei in der insbesondere aus Fig. 3A ersichtlichen Stellung, in der der Bundabschnitt 242 eine solche Stellung in der jeweils zugeordneten Stecköffnung 200A, 200B einnimmt, dass die Ausgangsöffnung 201A, 201B nicht durch den Bundabschnitt 242 versperrt ist.

Wie dies aus der Schnittansicht gemäß Fig. 3D ersichtlich ist, stehen sich die magnetischen Elemente 25A, 25B, 32A, 32B der Verschlussteile 2, 3 beim Ansetzen der Verschlussteile 2, 3 aneinander magnetisch anziehend gegenüber, sodass die Verschlussteile 2, 3 entlang der Schließrichtung X zueinander hin gezogen werden.

Wie dies aus Fig. 3A ersichtlich ist, nimmt das Betätigungselement 27 in der dargestellten Stellung der Verstellelemente 24A, 24B eine nach außen vorragende Stellung an dem Gehäuseteil 20 ein. An dem Betätigungselement 27 kann hierbei beispielsweise eine Markierung, zum Beispiel eine rote Farbmarkierung, angebracht sein, die einem Nutzer signalisiert, dass die Verstellelemente 24A, 24B sich in ihrer ersten Stellung befinden.

Beim Ansetzen gelangen die Eingriffsvorsprünge 310 an den Eingriffselementen 31A, 31B in Eingriff mit den Eingriffsvorsprüngen 243 an den starren Bundabschnitten 242 der Verstellelemente 24A, 24B. Beim Ansetzen der Verschlussteile 2, 3 gelangt zudem der Lagerzapfen 300 in Eingriff mit der zugeordneten Eingriffsöffnung 202, sodass eine drehende Lagerung zwischen den Verschlussteilen 2, 3 hergestellt wird, wie dies aus Fig. 4A-4F ersichtlich ist.

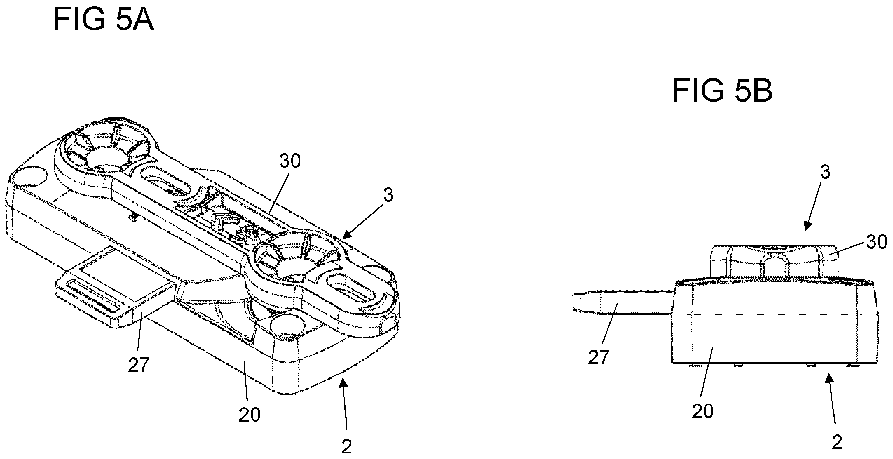

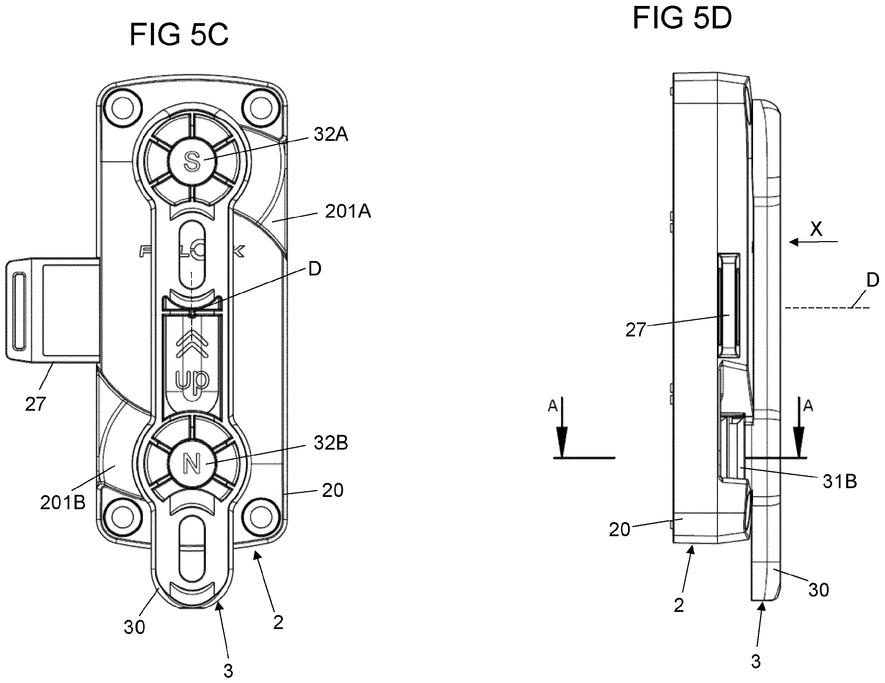

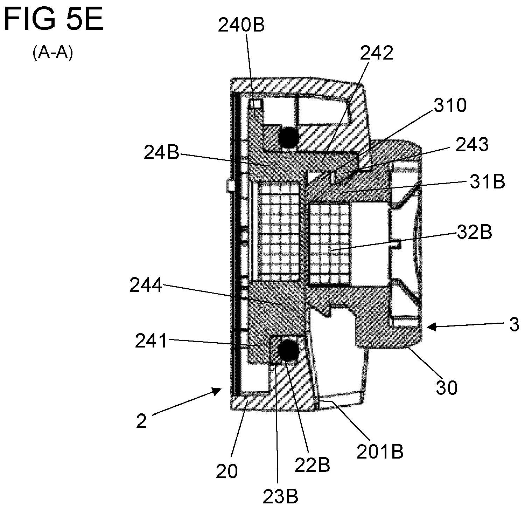

Wie aus Fig. 4A, 4C und 4F ersichtlich, werden die Verschlussteile 2, 3 beim Ansetzen soweit um die Drehachse D zueinander ausgelenkt, dass die Eingriffsvorsprünge 310 an den Eingriffselementen 31A, 31B an den Eingriffsvorsprüngen 243 an den Verstellelementen 24A, 24B vorbeibewegt werden können. Nachdem die Eingriffsvorsprünge 310 an den Eingriffselementen 31A, 31B die Eingriffsvorsprünge 243 an den Verstellelementen 24A, 24B passiert haben, gelangen die Eingriffsvorsprünge 243, 310 quer zur Schließrichtung X miteinander in Eingriff, wie dies aus Fig. 5A-5E ersichtlich ist.

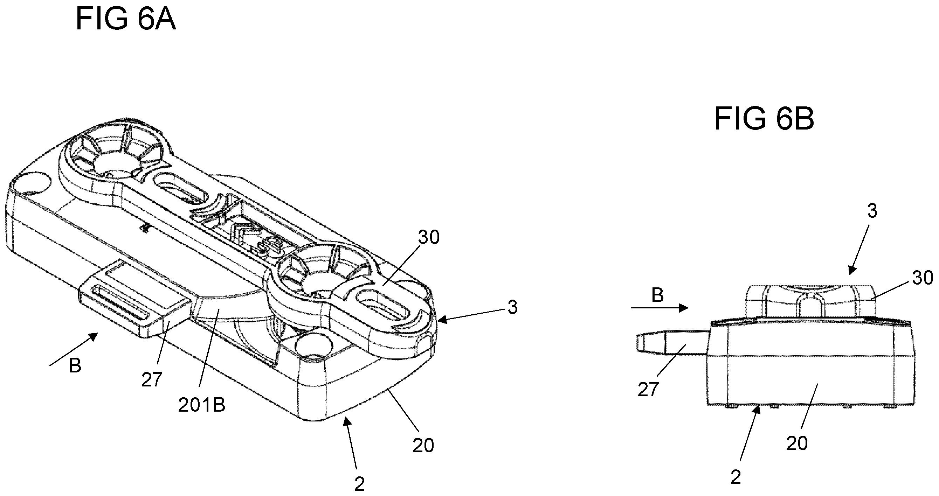

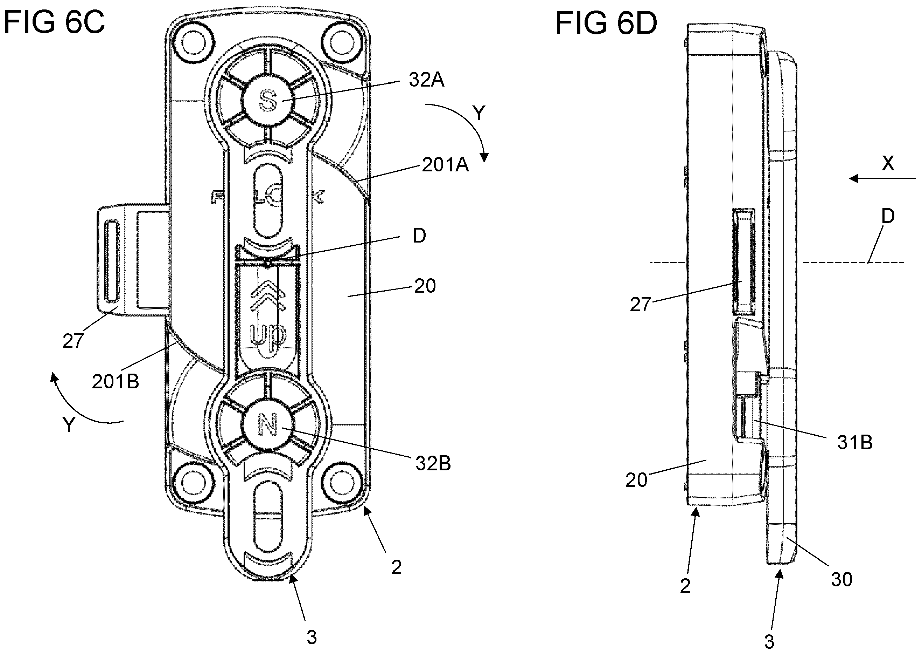

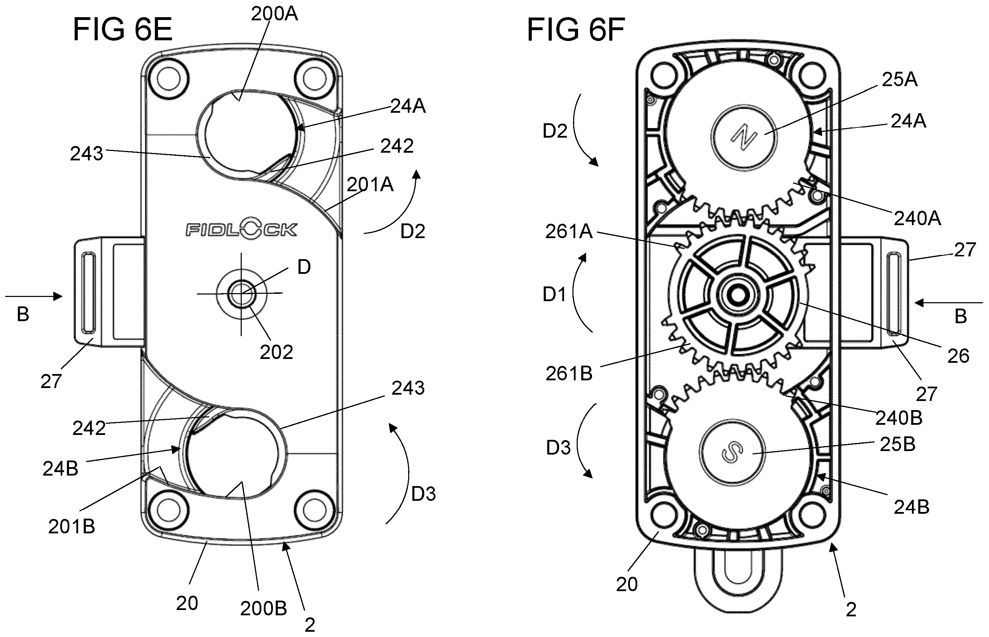

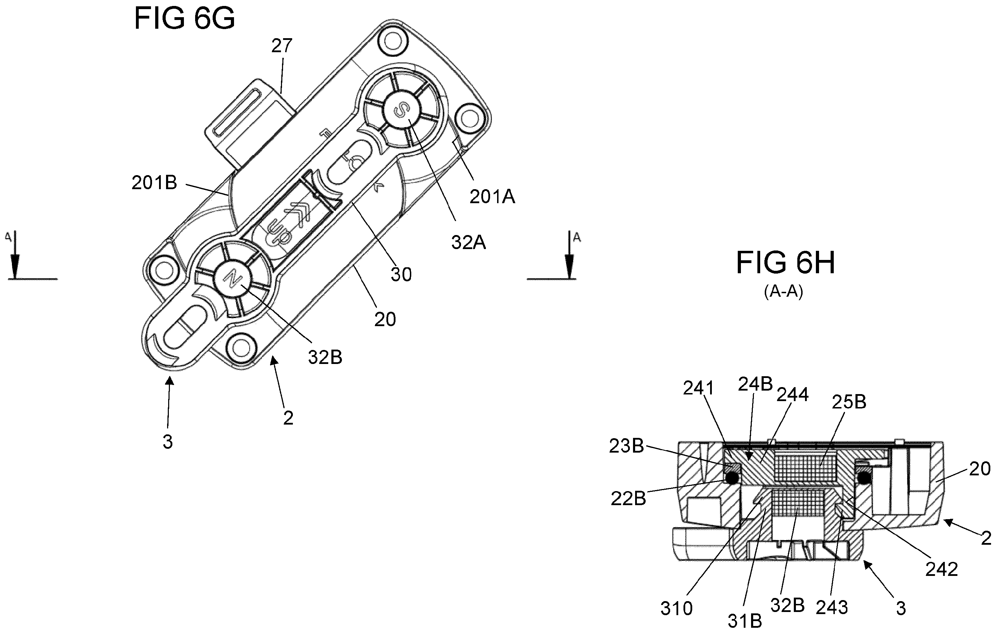

Nach dem Ansetzen der Verschlussteile 2, 3 sind die Verstellelemente 24A, 24B zunächst noch, wie aus Fig. 5A-5E ersichtlich, in ihrer ersten Stellung, in der die Ausgangsöffnungen 201A, 201B an den Stecköffnungen 200A, 200B freigegeben sind und somit ein Öffnen der Verschlussvorrichtung 1 durch Verschwenken der Verschlussteile 2, 3 um die Drehachse D relativ zueinander möglich ist. Nach dem Ansetzen der Verschlussteile 2, 3 aneinander kann ein Nutzer durch ein Drücken des Betätigungselements 27 in die Betätigungsrichtung B in das Gehäuseteil 20 die Verstellelemente 24A, 24B aus ihrer ersten Stellung in die zweite Stellung verdrehen, wie dies im Übergang von Fig. 6A-6H hin zu Fig. 7A-7E ersichtlich ist.

Beim Eindrücken des Betätigungselements 27 werden die Verstellelemente 24A, 24B jeweils an den zugeordneten Lageröffnungen 203A, 203B verdreht, sodass sich die Eingriffsvorsprünge 243 an den Stecköffnungen 200A, 200B verdrehen (siehe Fig. 6B und 6F). In der zweiten Stellung der Verstellelemente 24A, 24B nehmen die Bundabschnitte 242 der Verstellelemente 24A, 24B hierbei jeweils eine solche Stellung an der zugeordneten Stecköffnung 200A, 200B ein, dass der Bundabschnitt 242 die jeweils zugeordnete Ausgangsöffnung 201A, 201B versperrt und somit die Eingriffselemente 31A, 31B nicht in die Öffnungsrichtung Y aus den Stecköffnungen 200A, 200B heraus bewegt werden können.

In der zweiten Stellung der Verstellelemente 24A, 24B ist ein Verschwenken der Verschlussteile 2, 3 um die durch den Lagerzapfen 300 geschaffene drehende Lagerung somit gesperrt. Die Verschlussvorrichtung 1 kann nicht geöffnet werden, jedenfalls nicht unbeabsichtigt ohne Betätigung der Verstellelemente 24A, 24B.

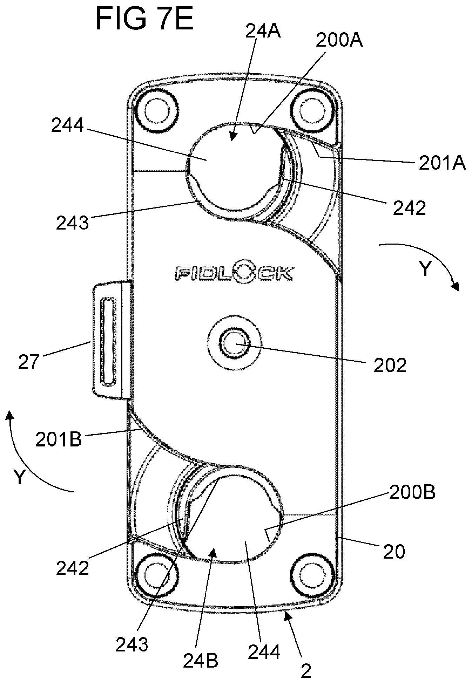

Wie dies aus Fig. 7E ersichtlich ist, ist in der zweiten Stellung der Verstellelemente 24A, 24B das Betätigungselement 27 in das Gehäuseteil 20 hineingedrückt, sodass beispielsweise eine Markierung an dem Betätigungselement 27 nicht mehr sichtbar ist. Ein Nutzer wird somit darüber informiert, dass sich die Verstellelemente 24A, 24B in der zweiten Stellung befinden und die Verbindung zwischen den Verschlussteilen 2, 3 somit gesichert ist.

Soll die Verschlussvorrichtung 1 wieder geöffnet werden, kann das Betätigungselement 27 entgegen der Betätigungsrichtung B aus dem Gehäuseteil 20 herausgezogen werden, sodass dadurch die Verstellelemente 24A, 24B aus der zweiten Stellung (Fig. 7E) zurück in ihre erste Stellung (Fig. 3G) verdreht werden. Die Verschlussteile 2, 3 können somit um die Drehachse D zueinander verschwenkt werden, und die Verschlussvorrichtung 1 kann geöffnet werden.

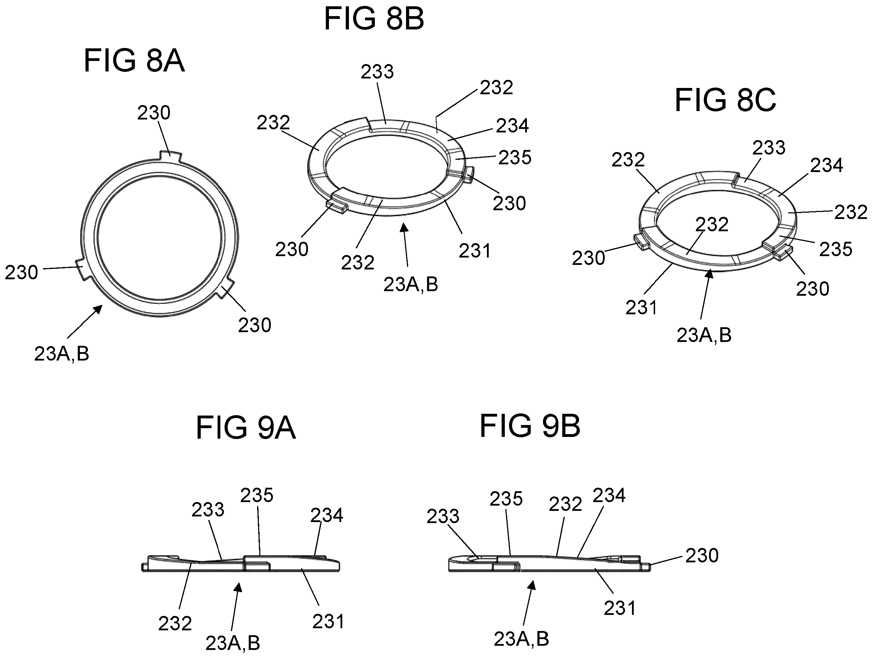

Fig. 8A-8C, 9A, 9B und 10 zeigen Ansichten des Auflaufelements 23A, 23B. Ein solches Auflaufelement 23A, 23B ist hierbei jedem Verstellelement 24A, 24B zugeordnet.

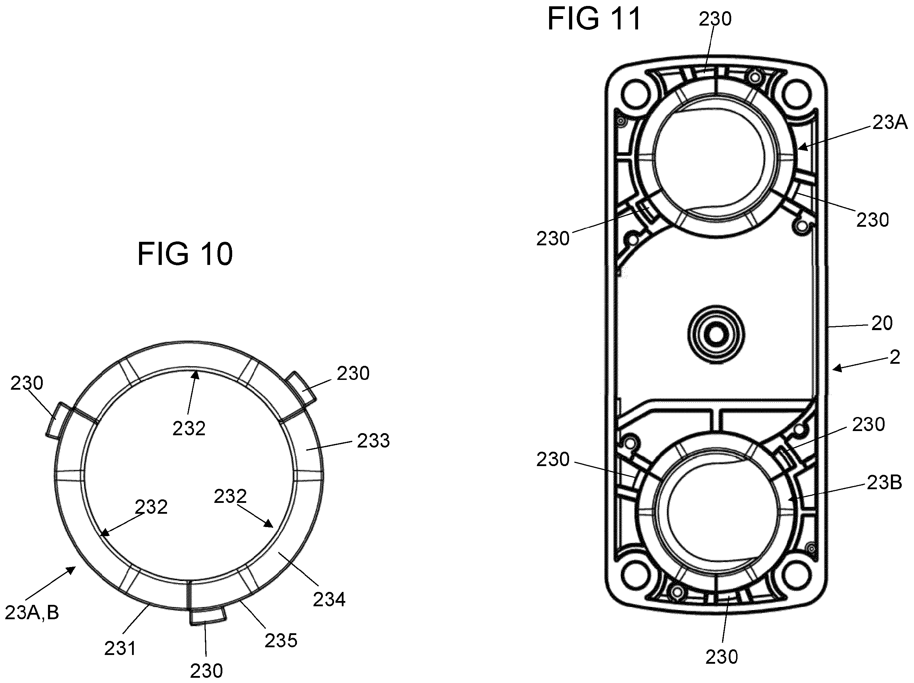

Das Auflaufelement 23A, 23B ist über Formschlusselemente 230 in Form von radial vorstehenden Zapfen drehfest an dem Gehäuseteil 20 aufgenommen, wie dies aus Fig. 11 ersichtlich ist. Das Auflaufelement 23A, 23B ist hierbei über ein Elastizitätselement 22A, 22B axial an dem Gehäuseteil 20 abgestützt und kann somit im Rahmen der Elastizität des Elastizitätselements 22A, 22B zumindest geringfügig axial an dem Gehäuseteil 20 bewegt werden.

Das Auflaufelement 23A, 23B weist einen Ringkörper 231 auf, an dessen einer Seite ein Auflaufabschnitt 232 geformt ist. Der Auflaufabschnitt 232 ist durch drei Rampenabschnitte 234 geformt, an die jeweils beidseits ein Plateau 233, 235 anschließt. Die Plateaus 233, 235 befinden sich hierbei axial an unterschiedlichen Positionen.

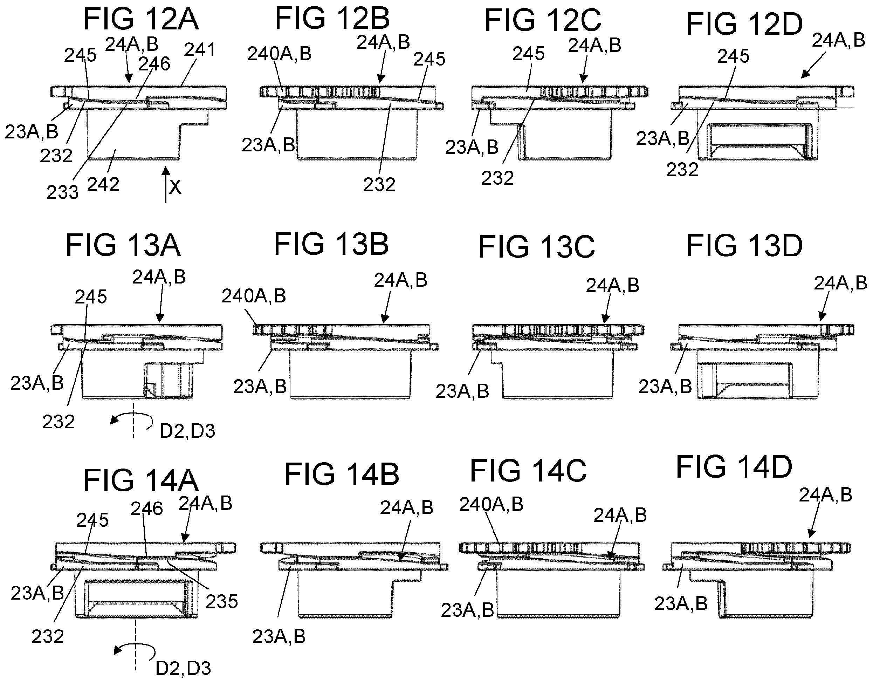

Fig. 12A-12D zeigen der Verstellelemente 24A, 24B gemeinsam mit dem zugeordneten Auflaufelement 23A, 23B in der ersten Stellung. Fig. 12A-12D (wie auch Fig. 13A-13D und 14A-14D) zeigen hierbei Seitenansichten aus vier unterschiedlichen, um 90° zueinander versetzten Raumrichtungen.

In der ersten Stellung der Verstellelemente 24A, 24B liegt ein erhabenes Plateaus 246 an dem Auflaufabschnitt 241 des Verstellelements 24A, 24B an dem Plateau 233 des Auflaufelements 23A, 23B an, wie dies aus Fig. 12A ersichtlich ist.

Wird das Verstellelement 24A, 24B an dem Gehäuseteil 20 aus der ersten Stellung heraus verdreht, so läuft ein Rampenabschnitt 245 des Auflaufabschnitts 241 auf die Rampe 234 an dem Auflaufelement 23A, 23B auf (Fig. 13A-13D), bis das Plateau 246 am Auflaufabschnitt 241 an dem Plateau 235 an dem Auflaufelement 23A, 23B anliegt, wie dies aus Fig. 14A-14D ersichtlich ist. Durch Verdrehen wird somit ein axialer Abstand zwischen den Verstellelementen 24A, 24B und den Auflaufelementen 23A, 23B vergrößert, sodass die Verstellelemente 24A, 24B axial in die Schließrichtung X an dem Gehäuseteil 20 verstellt werden und somit durch elastische Verformung der Elastizitätselemente 22A, 22B eine elastische Vorspannungskraft bereitgestellt wird.

Insbesondere ziehen die Verstellelemente 24A, 24B durch ihre axiale Verstellung beim Verdrehen die Eingriffselemente 31A, 31B in die Schließrichtung X in Eingriff mit den Stecköffnungen 200A, 200B, sodass die Eingriffselemente 31A, 31B in die Schließrichtung X axial vorgespannt werden und die Verschlussteile 2, 3 somit unter axialer Vorspannung im Wesentlichen spielfrei aneinandergehalten werden. Auf diese Weise wird ein besonders sicherer, fester, spiel- und klapperfreier Halt der Verschlussteile 2, 3 aneinander hergestellt, der im Betrieb einen sicheren, zuverlässigen, vibrationssicheren Halt der Verschlussteile 2, 3 aneinander ermöglicht.

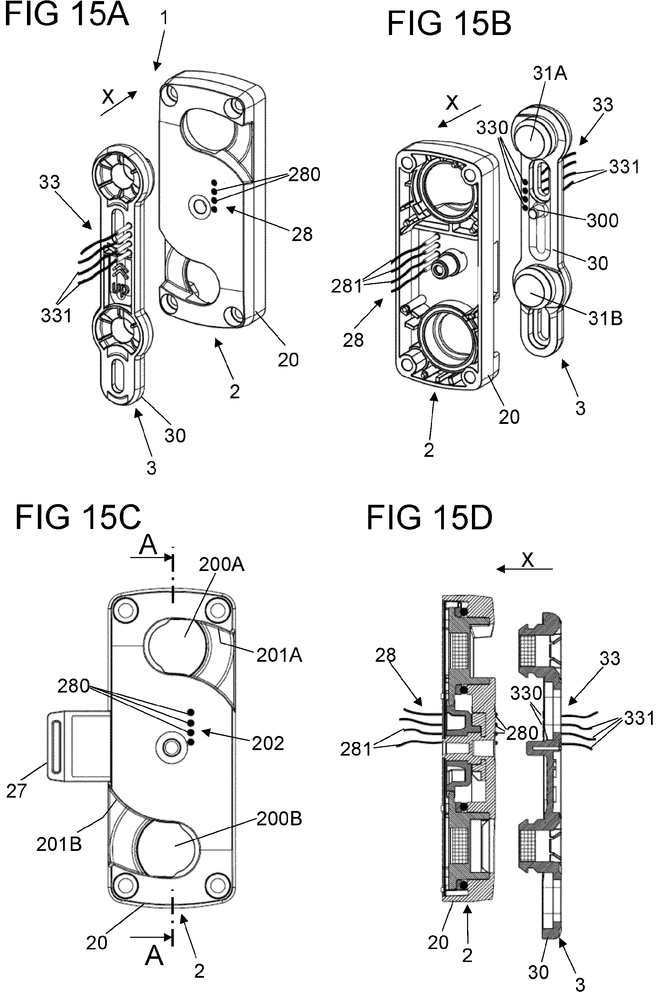

Bei dem vorangehend beschriebenen Ausführungsbeispiel kann die Verschlussvorrichtung 1 als elektrische Verschlussvorrichtung mit elektrischen Kontakten ausgebildet sein, sodass bei Verbinden der Verschlussteile 2, 3 (auch) eine elektrische Verbindung hergestellt wird. Dies ist anhand der Ausführungsbeispiele nach Fig. 15A-15D bis 17 veranschaulicht.

Das Ausführungsbeispiel gemäß Fig. 15A-15D entspricht funktional dem Ausführungsbeispiel der Verschlussvorrichtung 1 gemäß Fig. 1 bis 14A-14D, sodass zur funktionalen Ausgestaltung der Verschlussvorrichtung 1 auf die vorangehenden Erläuterungen verwiesen wird.

Bei dem dargestellten Ausführungsbeispiel sind an den Verschlussteilen 2, 3 zusätzlich Kontaktanordnungen 28, 33 angeordnet, die durch Kontaktelemente 280, 330 an den jeweiligen Gehäuseteilen 20, 30 gebildet sind. Werden die Verschlussteile 2, 3 zum Schließen der Verschlussvorrichtung 1 entlang der Schließrichtung X aneinander angesetzt, gelangen die Kontakte 28, 33 miteinander in elektrischen Kontakt, sodass eine (bei dem dargestellten Ausführungsbeispiel) vierpolige elektrische Verbindung zwischen den Kontaktanordnungen 28, 33 hergestellt wird. Leitungen 281, 331 werden somit elektrisch miteinander verbunden, sodass Ströme übertragen werden können, beispielsweise zur Übertragung von Steuersignalen oder eines elektrischen Versorgungstroms.

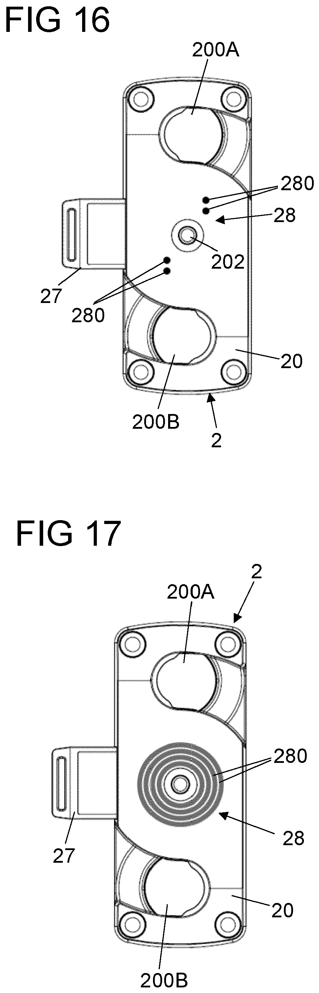

Die Ausführungsbeispiele gemäß Fig. 16 und Fig. 17 unterscheiden sich durch die Anordnung der elektrischen Kontakte 280 an dem Gehäuseteil 20 des Verschlussteils 2 (wobei das Verschlussteil 3 an dem Gehäuse 30 entsprechend angeordnete Kontakte 330 aufweist). Bei dem Ausführungsbeispiel nach Fig. 16 sind zwei Paare von Kontakten 280 diametral gegenüberliegend zu der Eingriffsöffnung 202 an dem Gehäuseteil 20 angeordnet. Bei dem Ausführungsbeispiel nach Fig. 17 sind die Kontakte 280 durch ringförmige Kontakte ausgebildet.

Bei allen Ausführungsbeispielen kann eine beliebige Anzahl von Kontakten 280, 330 vorgesehen sein, zum Beispiel zwei, drei, vier, sieben oder auch noch mehr Kontakte.

Bei dem in Fig. 1 bis 14A-14D dargestellten Ausführungsbeispiel sind die Stecköffnungen 200A, 200B durch Ausgangsöffnungen 201A, 201B seitlich geöffnet, sodass die Verschlussteile 2, 3 durch Verdrehen um die zentrale Drehachse D relativ zueinander geöffnet werden können. Durch Verdrehen der Verschlussteile 2, 3 um die Drehachse D gelangen die Eingriffselemente 31A, 31B durch die Ausgangsöffnungen 201A, 201B hindurch aus den Stecköffnungen 200A, 200B heraus, sodass der Eingriff der Eingriffsvorsprünge 243, 310 aufgehoben und die Verschlussvorrichtung 1 somit geöffnet wird.

Bei dem Ausführungsbeispiel nach Fig. 1 bis 14A-14D sind die Ausgangsöffnungen 201A, 201B an unterschiedlichen Seiten des Gehäuseteils 20 angeordnet, sodass die Stecköffnungen 200A, 200B in entgegengesetzte Richtungen offen sind. Die Ausgangsöffnungen 201A, 201B liegen sich hierbei diametral zur an der Eingriffsöffnung 202 gebildeten Drehachse D gegenüber. Dies ermöglicht ein Verdrehen der Verschlussteile 2, 3 zueinander um die Drehachse D, um auf diese Weise die Eingriffselemente 31A, 31B durch die Ausgangsöffnungen 201A, 201B hindurch zu bewegen und die Verschlussvorrichtung 1 somit zu öffnen.

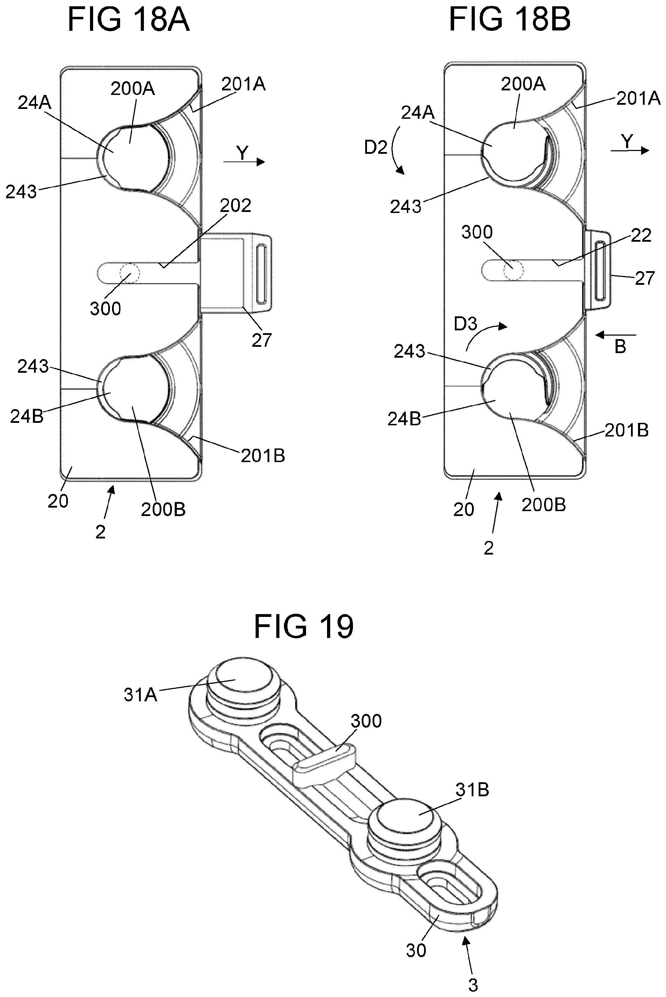

Während bei dem Ausführungsbeispiel nach Fig. 1 bis 14A-14D das Öffnen der Verschlussvorrichtung 1 durch Verdrehen der Verschlussteile 2, 3 um die Drehachse D relativ zueinander erfolgt, ist auch denkbar, die Verschlussvorrichtung 1 so auszugestalten, dass die Verschlussrichtung 1 durch Parallelverschiebung der Verschlussteile 2, 3 geöffnet werden kann. Dies ist anhand von Fig. 18A und 18B veranschaulicht.

Bei diesem Ausführungsbeispiel sind die Stecköffnungen 200A, 200B durch Ausgangsöffnungen 201A, 201B geöffnet, die gleichgerichtet an der gleichen Seite des Gehäuseteils 20 angeordnet sind und ermöglichen, das zweite Verschlussteil 3 durch Parallelverschiebung in die Öffnungsrichtung Y zu dem Gehäuseteil 2 zu verschieben, um auf diese Weise die Eingriffselemente 31A, 31B des zweiten Verschlussteils 3 in die Öffnungsrichtung Y aus den Stecköffnungen 200A, 200B zu entfernen.

Wiederum sind an den Stecköffnungen 200A, 200B Verstellelemente 24A, 24B angeordnet, die drehbar an dem Gehäuseteil 20 gelagert sind und mit einem Betätigungselement 27 in Wirkverbindung stehen derart, dass durch lineares Verstellen des Betätigungselements 27 in eine Betätigungsrichtung B die Verstellelemente 24A, 24B in Drehrichtungen D2, D3 aus der ersten Stellung (Fig. 18A) in die jeweils zugeordnete zweite Stellung (Fig. 18B) verstellt werden können.

Das Betätigungselement 27 kann auf der den Ausgangsöffnungen 201A, 201B zugeordneten Seite des Gehäuseteils 20 angeordnet sein, wie bei dem dargestellten Ausführungsbeispiel. Das Betätigungselement 27 kann aber auch auf der anderen, abgewandten Seite (in Fig. 18A, 18B links) des Gehäuseteils 20 angeordnet sein.

Bei dem dargestellten Ausführungsbeispiel ist die Eingriffsöffnung 202 an dem Gehäuseteil 20 durch ein in die Öffnungsrichtung Y geöffnetes Langloch ausgebildet, in das das zweite Verschlussteil 3 mit dem Lagerzapfen 300 beim Schließen der Verschlussvorrichtung 1 in Eingriff gelangt. Bei Parallelverschiebung der Verschlussteile 2, 3 relativ zueinander wird der Lagerzapfen 300 in der Eingriffsöffnung 202 in die Öffnungsrichtung Y verstellt, sodass darüber die Verschiebebewegung der Verschlussteile 2, 3 relativ zueinander geführt ist.

Bei den vorangehend beschriebenen Ausführungsbeispielen ist der Lagerzapfen 300 durch einen zylindrischen Zapfen ausgebildet. Wie dies in Fig. 19 veranschaulicht ist, kann bei dem Ausführungsbeispiel der Verschlussvorrichtung 1 nach Fig. 18A, 18B der Lagerzapfen 300 aber auch als längserstreckter Steg ausgebildet sein, der eine verbesserte Längsführung zum Führen der Verschiebebewegung in die Öffnungsrichtung Y für das Verstellteil 3 schafft.

Ansonsten, insbesondere mit Blick auf die Funktion der Verstellelemente 24A, 24B, wird auf die vorangehenden Erläuterungen zum Ausführungsbeispiel nach Fig. 1 bis 14A-14D verwiesen.

Der der Erfindung zugrunde liegende Gedanke ist nicht auf die vorangehend beschriebenen Ausführungsbeispiele beschränkt, sondern lässt sich auch in anderer Weise verwirklichen.

Eine Verschlussvorrichtung der beschriebenen Art kann beispielsweise an einem Fahrzeug, zum Beispiel an einem Fahrrad, beispielsweise einem elektrisch angetriebenen Farbrad (E-Bike) zum Einsatz kommen.

Beispielsweise kann eine Verschlussvorrichtung der beschriebenen Art zum Verbinden einer elektrischen Baugruppe mit einem Fahrradrahmen eingesetzt werden, zum Beispiel zum lösbaren Verbinden einer Batterieanordnung mit dem Fahrradrahmen.

Die Verschlussvorrichtung kann wie bei den dargestellten Ausführungsbeispielen als magnetische Verschlussvorrichtung mit magnetischen Elementen ausgebildet sein. Denkbar ist aber auch, die Verschlussvorrichtung als rein mechanische Verschlussvorrichtung unter Weglassen der magnetischen Elemente auszugestalten.

### Bezugszeichenliste

- 1: Verschlussvorrichtung
- 2: Verschlussteil
- 20: Gehäuseteil
- 200A, B: Stecköffnung
- 201A, B: Ausgangsöffnung
- 202: Eingriffsöffnung
- 203A, B: Lageröffnung
- 204: Lagerelement
- 21: Abdeckelement
- 22A, B: Elastizitätselement
- 23A, B: Auflaufelement
- 230: Formschlusselement
- 231: Ringkörper
- 232: Rampenabschnitt
- 233: Plateau
- 234: Rampe
- 235: Plateau
- 24A, B: Verstellelement
- 240A, B: Verzahnungsabschnitt
- 241: Auflaufabschnitt
- 242: Starrer Bundabschnitt
- 243: Eingriffsvorsprung
- 244: Basis
- 245: Rampenabschnitt
- 246: Plateau
- 25A, B: Magnetelement
- 26: Antriebselement
- 260: Verzahnungsabschnitt
- 261A, B: Verzahnungsabschnitt
- 27: Betätigungselement
- 270: Verzahnungsabschnitt
- 28: Kontaktanordnung
- 280: Kontaktelemente
- 281: Leitungen
- 3: Verschlussteil
- 30: Grundkörper
- 300: Lagerzapfen
- 31A, B: Eingriffselement
- 310: Eingriffsvorsprung
- 311: Schaftabschnitt
- 32A, B: Magnetelement
- 33: Kontaktanordnung
- 330: Kontaktelemente
- 331: Leitungen
- 4, 5: Baugruppen
- D: Drehachse
- D1-D3: Drehbewegung
- X: Schließrichtung
- Y: Öffnungsrichtung

## Patentansprüche

1. Verschlussvorrichtung (1) zum Verbinden zweier Baugruppen (4, 5) miteinander, mit
einem einer ersten der Baugruppen (4, 5) zugeordneten, ersten Verschlussteil (2), das ein Gehäuseteil (20) und zwei Steckplätze mit je zumindest einem ersten Eingriffsvorsprung (243) aufweist, wobei jeder Steckplatz ein zu dem Gehäuseteil (20) verstellbares Verstellelement (24A, 24B) aufweist, und
einem einer zweiten der Baugruppen (4, 5) zugeordneten, zweiten Verschlussteil (3), das zwei Eingriffselemente (31A, 31B) mit je zumindest einem zweiten Eingriffsvorsprung (310) aufweist,
wobei zum Schließen der Verschlussvorrichtung (1) jedes der Eingriffselemente (31A, 31B) des zweiten Verschlussteils (3) an einen der Steckplätze des ersten Verschlussteils (2) ansetzbar ist, in einer Schließstellung die ersten Eingriffsvorsprünge (243) mit den zweiten Eingriffsvorsprüngen (310) zum Halten des ersten Verschlussteils (2) und des zweiten Verschlussteils (3) entgegen der Schließrichtung (X) aneinander in Eingriff stehen und das erste Verschlussteil (2) und das zweite Verschlussteil (3) zum Öffnen der Verschlussvorrichtung (1) voneinander trennbar sind, wobei das erste Verschlussteil (2) und das zweite Verschlussteil (3) zum Öffnen der Verschlussvorrichtung (1) entlang einer zur Schließrichtung (X) senkrechten Bewegungsebene relativ zueinander bewegbar sind,
wobei das Verstellelement (24A, 24B) jedes Steckplatzes zwischen einer ersten Stellung und einer zweiten Stellung verstellbar an dem Gehäuseteil (20) des ersten Verschlussteils (2) angeordnet ist, wobei das Verstellelement (24A, 24B) ausgebildet ist, in der ersten Stellung ein Ansetzen des ersten Verschlussteils (2) und des zweiten Verschlussteils (3) zum Schließen der Verschlussvorrichtung (1) entlang einer Schließrichtung (X) aneinander zu ermöglichen und in der zweiten Stellung ein Bewegen des ersten Verschlussteils (2) und des zweiten Verschlussteils (3) entlang der Bewegungsebene relativ zueinander und dadurch ein Öffnen der Verschlussvorrichtung (1) zu sperren,
wobei das erste Verschlussteil (2) ein mit dem Verstellelement (24A, 24B) jedes Steckplatzes wirkverbundenes Antriebselement (26) aufweist, das ausgebildet ist, bei Betätigung eine Verstellkraft in das Verstellelement (24A, 24B) einzuleiten.

2. Verschlussvorrichtung (1) nach Anspruch 1, **dadurch gekennzeichnet, dass** eines des ersten Verschlussteils (2) und des zweiten Verschlussteils (3) einen Lagerzapfen (300) und das andere des ersten Verschlussteils (2) und des zweiten Verschlussteils (3) eine Eingriffsöffnung (202) aufweisen, wobei in der Schließstellung der Lagerzapfen (300) in die Eingriffsöffnung (202) eingreift und dadurch das erste Verschlussteil (2) und das zweite Verschlussteil (3) aneinander gelagert sind.

3. Verschlussvorrichtung (1) nach Anspruch 1 oder 2, **dadurch gekennzeichnet, dass** zum Öffnen der Verschlussvorrichtung (1) die ersten Eingriffsvorsprünge (243) und die zweiten Eingriffsvorsprünge (310) durch Verschwenken des ersten Verschlussteils (2) und des zweiten Verschlussteils (3) entlang der Bewegungsebene relativ zueinander außer Eingriff voneinander bringbar sind, oder
dass zum Öffnen der Verschlussvorrichtung (1) die ersten Eingriffsvorsprünge (243) und die zweiten Eingriffsvorsprünge (310) durch Parallelverschiebung des ersten Verschlussteils (2) und des zweiten Verschlussteils (3) entlang der Bewegungsebene relativ zueinander außer Eingriff voneinander bringbar sind.

4. Verschlussvorrichtung (1) nach einem der vorangehenden Ansprüche, **dadurch gekennzeichnet, dass** der zumindest eine erste Eingriffsvorsprung (243) jedes der Steckplätze an dem Verstellelement (24A, 24B) angeordnet und gemeinsam mit dem Verstellelement (24A, 24B) relativ zu dem Gehäuseteil (20) verstellbar ist.

5. Verschlussvorrichtung (1) nach einem der vorangehenden Ansprüche, **dadurch gekennzeichnet, dass** das Verstellelement (24A, 24B) jedes Steckplatzes eine Basis (244) und einen starr an der Basis (244) geformten, entlang der Schließrichtung (X) von der Basis (244) vorstehenden Bundabschnitt (242) aufweist.

6. Verschlussvorrichtung (1) nach einem der vorangehenden Ansprüche, **dadurch gekennzeichnet, dass** das Verstellelement (24A, 24B) jedes Steckplatzes zwischen der ersten Stellung und der zweiten Stellung zu dem Gehäuseteil (20) des ersten Verschlussteils (2) verdrehbar ist.

7. Verschlussvorrichtung (1) nach einem der vorangehenden Ansprüche, **dadurch gekennzeichnet, dass** das Verstellelement (24A, 24B) jedes Steckplatzes, wenn das erste Verschlussteil (2) und das zweite Verschlussteil (3) aneinander angesetzt sind, aus der ersten Stellung in die zweite Stellung überführbar ist, um in der zweiten Stellung jeweils eine Vorspannkraft entlang der Schließrichtung (X) auf das zugeordnete Eingriffselement (31A, 31B) auszuüben.

8. Verschlussvorrichtung (1) nach einem der vorangehenden Ansprüche, **dadurch gekennzeichnet, dass** das Verstellelement (24A, 24B) jedes Steckplatzes in der ersten Stellung eine erste Axialstellung zu dem Gehäuseteil (20) und in der zweiten Stellung eine von der ersten Axialstellung unterschiedliche, entlang der Schließrichtung (X) versetzte, zweite Axialstellung zu dem Gehäuseteil (20) einnimmt.

9. Verschlussvorrichtung (1) nach einem der vorangehenden Ansprüche, **dadurch gekennzeichnet, dass** das erste Verschlussteil (2) an jedem der Steckplätze ein an dem Gehäuseteil (20) angeordnetes Auflaufelement (23A, 23B) mit einem ersten Rampenabschnitt (232) und das Verstellelement (24A, 24B) einen Auflaufabschnitt (241) mit einem zweiten Rampenabschnitt (245) aufweist, wobei der erste Rampenabschnitt (245) bei einem Verstellen des Verstellelements (24A, 24B) zum Axialverstellen des zugeordneten Verstellelements (24A, 24B) an dem zweiten Rampenabschnitt (245) gleitet.

10. Verschlussvorrichtung (1) nach einem der vorangehenden Ansprüche, **dadurch gekennzeichnet, dass** das Antriebselement (26) drehbar an dem Gehäuseteil (20) angeordnet ist.

11. Verschlussvorrichtung (1) nach einem der vorangehenden Ansprüche, **dadurch gekennzeichnet, dass** das Antriebselement (26) einen ersten Verzahnungsabschnitt (260) aufweist, der mit einem Verzahnungsabschnitt (270) eines Betätigungselements (27) in Verzahnungseingriff steht.

12. Verschlussvorrichtung (1) nach einem der vorangehenden Ansprüche, **dadurch gekennzeichnet, dass** das Antriebselement (26) einen zweiten Verzahnungsabschnitt (261A, 261B) aufweist, der mit einem Verzahnungsabschnitt (240A, 240B) des Verstellelements (24A, 24B) in Verzahnungseingriff steht.

13. Verschlussvorrichtung (1) nach einem der vorangehenden Ansprüche, **dadurch gekennzeichnet, dass** das Gehäuseteil (20) an jedem Steckplatz je eine Stecköffnung (200A, 200B) aufweist, in die je ein Eingriffselement (31A, 31B) des zweiten Verschlussteils (3) entlang der Schließrichtung (X) zum Schließen der Verschlussvorrichtung (1) einsetzbar ist.

14. Verschlussvorrichtung (1) nach Anspruch 13, **dadurch gekennzeichnet, dass** jede Stecköffnung (200A, 200B) durch eine Ausgangsöffnung (201A, 201B) in eine quer zur Schließrichtung (X) gerichtete Öffnungsrichtung (Y) geöffnet ist, wobei die Eingriffselemente (31A, 31B) in der ersten Stellung des Verstellelements (24A, 24B) in die Öffnungsrichtung (Y) zum Öffnen der Verschlussvorrichtung (1) aus den Stecköffnungen (X) bewegbar sind,
insbesondere wobei das dem zumindest einen der Steckplätze zugeordnete Verstellelement (24A, 24B) in der zweiten Stellung die Ausgangsöffnung (201A, 201B) derart versperrt, dass das zugeordnete Eingriffselement (31A, 31B) nicht in die Öffnungsrichtung (Y) zum Öffnen der Verschlussvorrichtung (1) aus der Stecköffnung (X) bewegbar ist.

15. Verschlussvorrichtung (1) nach einem der vorangehenden Ansprüche, **dadurch gekennzeichnet, dass** das erste Verschlussteil (2) ein erstes magnetisches Element (25A, 25B) und das zweite Verschlussteil (2) ein zweites magnetisches Element (32A, 32B) aufweisen, wobei das erste magnetische Element (25A, 25B) und das zweite magnetische Element (32A, 32B) magnetisch anziehend zusammenwirken, um das Ansetzen des ersten Verschlussteils (2) und des zweiten Verschlussteils (3) zum Schließen der Verschlussvorrichtung (1) magnetisch zu unterstützen.

## Claims

1. Locking device (1) for connecting two assemblies (4, 5) to one another, comprising
a first locking part (2) which is associated with a first one of the assemblies (4, 5) and comprises a housing part (20) and two slots each having at least one first engagement protrusion (243), wherein each slot comprises an adjustment element (24A, 24B) which can be adjusted relative to the housing part (20), and
a second locking part (3) which is associated with a second one of the assemblies (4, 5) and comprises two engagement elements (31A, 31B) each having at least one second engagement protrusion (310),
wherein, for closing the locking device (1), each of the engagement elements (31A, 31B) of the second locking part (3) can be attached to one of the slots of the first locking part (2), the first engagement protrusions (243) are engaged with the second engagement protrusions (310) in a closed position for holding the first locking part (2) and the second locking part (3) against one another against the closing direction (X), and the first locking part (2) and the second locking part (3) can be separated from one another for opening the locking device (1), wherein the first locking part (2) and the second locking part (3) are movable relative to one another along a movement plane perpendicular to the closing direction (X) for opening the locking device (1),
wherein the adjustment element (24A, 24B) of each slot is arranged on the housing part (20) of the first locking part (2) so as to be adjustable between a first position and a second position, wherein, in the first position, the adjustment element (24A, 24B) is configured to enable the first locking part (2) and the second locking part (3) to be attached to one another along a closing direction (X) for closing the locking device (1) and, in the second position, to block movement of the first locking part (2) and the second locking part (3) along the movement plane relative to one another and thereby blocking an opening of the locking device (1),
wherein the first locking part (2) comprises a drive element (26) which is operatively connected to the adjustment element (24A, 24B) of each slot and which is configured to introduce an adjusting force into the adjustment element (24A, 24B) when actuated.

2. Locking device (1) according to claim 1, **characterized in that** one of the first locking part (2) and the second locking part (3) comprises a bearing pin (300) and the other of the first locking part (2) and the second locking part (3) comprises an engagement opening (202), wherein the bearing pin (300) engages in the engagement opening (202) in the closed position and the first locking part (2) and, as a result, the second locking part (3) are supported against each other.

3. Locking device (1) according to claim 1 or 2, **characterized in that,** in order to open the locking device (1), the first engagement protrusions (243) and the second engagement protrusions (310) can be disengaged from one another by pivoting the first locking part (2) and the second locking part (3) along the movement plane relative to one another, or
that, for opening the locking device (1), the first engagement protrusions (243) and the second engagement protrusions (310) can be disengaged from one another by parallel displacement of the first locking part (2) and the second locking part (3) along the movement plane relative to one another.

4. Locking device (1) according to any one of the preceding claims,
**characterized in that** the at least one first engagement protrusion (243) of each of the slots is arranged on the adjustment element (24A, 24B) and can be adjusted together with the adjustment element (24A, 24B) relative to the housing part (20).

5. Locking device (1) according to any one of the preceding claims,
**characterized in that** the adjustment element (24A, 24B) of each slot comprises a base (244) and a collar portion (242) rigidly formed on the base (244) and projecting from the base (244) along the closing direction (X).

6. Locking device (1) according to any one of the preceding claims,
**characterized in that** the adjustment element (24A, 24B) of each slot is rotatable between the first position and the second position relative to the housing part (20) of the first locking part (2).

7. Locking device (1) according to any one of the preceding claims,
**characterized in that** the adjustment element (24A, 24B) of each slot, when the first locking part (2) and the second locking part (3) are attached to one another, can be transferred from the first position to the second position in order to apply, in the second position in each case, a pretensioning force to the associated engagement element (31A, 31B) along the closing direction (X).

8. Locking device (1) according to any one of the preceding claims,
**characterized in that** the adjustment element (24A, 24B) of each slot, in the first position, is in a first axial position relative to the housing part (20) and, in the second position, in a second axial position relative to the housing part (20), which differs from the first axial position and is offset along the closing direction (X).

9. Locking device (1) according to any one of the preceding claims,
**characterized in that** the first locking part (2) comprises, at each of the slots, a run-on element (23A, 23B) arranged on the housing part (20) and having a first ramp section (232), and the adjustment element (24A, 24B) comprises a run-on section (241) with a second ramp section (245), wherein the first ramp section (245) slides on the second ramp section (245) when the adjustment element (24A, 24B) is adjusted for axial adjustment of the associated adjustment element (24A, 24B).

10. Locking device (1) according to any one of the preceding claims,
**characterized in that** the drive element (26) is arranged rotatably on the housing part (20).

11. Locking device (1) according to any one of the preceding claims,
**characterized in that** the drive element (26) comprises a first toothed portion (260) which is in toothed engagement with a toothed portion (270) of an actuating element (27).

12. Locking device (1) according to any one of the preceding claims,
**characterized in that** the drive element (26) comprises a second toothed portion (261A, 261B) which is in toothed engagement with a toothed portion (240A, 240B) of the adjustment element (24A, 24B).

13. Locking device (1) according to any one of the preceding claims,
**characterized in that** the housing part (20) comprises an insertion opening (200A, 200B) at each slot, into each of which an engagement element (31A, 31B) of the second locking part (3) can be inserted along the closing direction (X) for closing the locking device (1).

14. Locking device (1) according to claim 13, **characterized in that** each insertion opening (200A, 200B) is opened through an exit opening (201A, 201B) in an opening direction (Y) directed transversely to the closing direction (X), wherein, in the first position of the adjustment element (24A, 24B), the engagement elements (31A, 31B) are movable out of the insertion openings (X) in the opening direction (Y), for opening the locking device (1),
in particular wherein the adjustment element (24A, 24B) associated with at least one of the slots blocks the exit opening (201A, 201B) in the second position in such a way that the associated engagement element (31A, 31B) cannot be moved out of the insertion opening (X) in the opening direction (Y) for opening the locking device (1).

15. Locking device (1) according to any one of the preceding claims,
**characterized in that** the first locking part (2) comprises a first magnetic element (25A, 25B) and the second locking part (2) comprises a second magnetic element (32A, 32B), wherein the first magnetic element (25A, 25B) and the second magnetic element (32A, 32B) magnetically attractively cooperate to magnetically support the attachment of the first locking part (2) and the second locking part (3) for closing the locking device (1).

## Revendications

1. Dispositif de fermeture (1) pour relier deux ensembles (4, 5), comprenant
une première partie de fermeture (2) associée à un premier des ensembles (4, 5), qui comporte une partie de boîtier (20) et deux emplacements d'insertion comportant chacun au moins une première saillie d'engagement (243), chaque emplacement d'insertion comportant un élément de réglage (24A, 24B) pouvant être déplacé par rapport à la partie de boîtier (20), et
une deuxième partie de fermeture (3) associée à un deuxième des ensembles (4, 5), qui comporte deux éléments d'engagement (31A, 31B) présentant chacun au moins une deuxième saillie d'engagement (310),
dans lequel chacun des éléments d'engagement (31A, 31B) de la deuxième partie de fermeture (3) peut être rattaché à l'un des emplacements d'insertion de la première partie de fermeture (2) pour fermer le dispositif de fermeture (1), les premières saillies d'engagement (243) s'engagent, dans une position fermée, avec les deuxièmes saillies d'engagement (310) pour maintenir la première partie de fermeture (2) et la deuxième partie de fermeture (3) l'une contre l'autre dans le sens opposé à la direction de fermeture (X), et la première partie de fermeture (2) et la deuxième partie de fermeture (3) peuvent être séparées l'une de l'autre pour ouvrir le dispositif de fermeture (1), la première partie de fermeture (2) et la deuxième partie de fermeture (3) pouvant se déplacer l'une par rapport à l'autre le long d'un plan de déplacement perpendiculaire à la direction de fermeture (X) pour ouvrir le dispositif de fermeture (1),
dans lequel l'élément de réglage (24A, 24B) de chaque emplacement d'insertion est agencé sur la partie de boîtier (20) de la première partie de fermeture (2) de manière à pouvoir être déplacé entre une première position et une deuxième position, l'élément de réglage (24A, 24B) étant conçu pour permettre, dans la première position, un rattachement de la première partie de fermeture (2) et de la deuxième partie de fermeture (3) l'une contre l'autre, le long d'une direction de fermeture (X), pour fermer le dispositif de fermeture (1), et, dans la deuxième position, de bloquer un déplacement de la première partie de fermeture (2) et de la deuxième partie de fermeture (3) l'une par rapport à l'autre le long du plan de déplacement, et donc l'ouverture du dispositif de fermeture (1),
dans lequel la première partie de fermeture (2) comporte un élément d'entraînement (26) relié fonctionnellement à l'élément de réglage (24A, 24B) de chaque emplacement d'insertion, qui est conçu pour introduire, lors de son actionnement, une force de réglage dans l'élément de réglage (24A, 24B).

2. Dispositif de fermeture (1) selon la revendication 1, **caractérisé en ce que** l'un des premier élément de fermeture (2) et deuxième élément de fermeture (3) comporte un tourillon (300) et l'autre des premier élément de fermeture (2) et deuxième élément de fermeture (3) comporte une ouverture d'engagement (202), le tourillon (300) s'engageant dans l'ouverture d'engagement (202) en position de fermeture, et donc la première partie de fermeture (2) et à la deuxième partie de fermeture (3) sont montées l'une à l'autre.

3. Dispositif de fermeture (1) selon la revendication 1 ou 2, **caractérisé en ce que**, pour ouvrir le dispositif de fermeture (1), les premières saillies d'engagement (243) et les deuxièmes saillies d'engagement (310) peuvent être désengagées les unes des autres par pivotement de la première partie de fermeture (2) et de la deuxième partie de fermeture (3) l'une par rapport à l'autre le long du plan de déplacement, ou
**que**, pour ouvrir le dispositif de fermeture (1), les premières saillies d'engagement (243) et les deuxièmes saillies d'engagement (310) peuvent être désengagées les unes des autres par un déplacement parallèle de la première partie de fermeture (2) et de la deuxième partie de fermeture (3) l'une par rapport à l'autre, le long du plan de déplacement.

4. Dispositif de fermeture (1) selon l'une quelconque des revendications précédentes, **caractérisé en ce que** la au moins une première saillie d'engagement (243) de chacun des emplacements d'insertion est agencée sur l'élément de réglage (24A, 24B) et peut être déplacée conjointement avec l'élément de réglage (24A, 24B) par rapport à la partie de boîtier (20).

5. Dispositif de fermeture (1) selon l'une quelconque des revendications précédentes, **caractérisé en ce que** l'élément de réglage (24A, 24B) de chaque emplacement d'insertion comporte une base (244) et une partie formant collerette (242) moulée de manière rigide sur la base (244) et faisant saillie de la base (244) le long de la direction de fermeture (X).

6. Dispositif de fermeture (1) selon l'une quelconque des revendications précédentes, **caractérisé en ce que** l'élément de réglage (24A, 24B) de chaque emplacement d'insertion peut pivoter entre la première position et la deuxième position par rapport à la partie de boîtier (20) de la première partie de fermeture (2).

7. Dispositif de fermeture (1) selon l'une quelconque des revendications précédentes, **caractérisé en ce que** l'élément de réglage (24A, 24B) de chaque emplacement d'insertion, lorsque la première partie de fermeture (2) et la deuxième partie de fermeture (3) sont rattachées l'une à l'autre, peut être amené de la première position à la deuxième position afin d'exercer, dans la deuxième position, une force de précontrainte le long de la direction de fermeture (X) sur l'élément d'engagement associé (31A, 31B).

8. Dispositif de fermeture (1) selon l'une quelconque des revendications précédentes, **caractérisé en ce que** l'élément de réglage (24A, 24B) de chaque emplacement d'insertion occupe, dans la première position, une première position axiale par rapport à la partie de boîtier (20) et, dans la deuxième position, une deuxième position axiale par rapport à la partie de boîtier (20), différente de la première position axiale et décalée le long de la direction de fermeture (X).

9. Dispositif de fermeture (1) selon l'une quelconque des revendications précédentes, **caractérisé en ce que** la première partie de fermeture (2) comporte, au niveau de chacun des emplacements d'insertion, un élément de butée (23A, 23B) agencé sur la partie de boîtier (20) et comportant une première section de rampe (232), et l'élément de réglage (24A, 24B) comporte une section de butée (241) avec une deuxième section de rampe (245), la première section de rampe (245) glissant, lors d'un déplacement de l'élément de réglage (24A, 24B) pour le réglage axial de l'élément de réglage associé (24A, 24B), sur la deuxième section de rampe (245).

10. Dispositif de fermeture (1) selon l'une quelconque des revendications précédentes, **caractérisé en ce que** l'élément d'entraînement (26) est agencé de manière rotatif sur la partie de boîtier (20).

11. Dispositif de fermeture (1) selon l'une quelconque des revendications précédentes, **caractérisé en ce que** l'élément d'entraînement (26) comporte une première partie dentée (260) qui est engrenée dans une partie dentée (270) d'un élément d'actionnement (27).

12. Dispositif de fermeture (1) selon l'une quelconque des revendications précédentes, **caractérisé en ce que** l'élément d'entraînement (26) comporte une deuxième partie dentée (261A, 261B) qui est engrenée dans une partie dentée (240A, 240B) de l'élément de réglage (24A, 24B).

13. Dispositif de fermeture (1) selon l'une quelconque des revendications précédentes, **caractérisé en ce que** la partie de boîtier (20) comporte, au niveau de chaque emplacement d'insertion, une ouverture d'insertion (200A, 200B) dans chacune desquelles un élément d'engagement (31A, 31B) de la deuxième partie de fermeture (3) peut être inséré le long de la direction de fermeture (X) pour fermer le dispositif de fermeture (1).

14. Dispositif de fermeture (1) selon la revendication 13, **caractérisé en ce que** chaque ouverture d'insertion (200A, 200B) débouche, par l'intermédiaire d'une ouverture de sortie (201A, 201B), dans une direction d'ouverture (Y) perpendiculaire à la direction de fermeture (X), dans lequel les éléments d'engagement (31A, 31B) peuvent, dans la première position de l'élément de réglage (24A, 24B), être déplacés dans la direction d'ouverture (Y) pour ouvrir le dispositif de fermeture (1) à partir des ouvertures d'insertion (X),
en particulier, dans lequel l'élément de réglage (24A, 24B) associé à au moins l'un des emplacements d'insertion, dans la deuxième position, bloque l'ouverture de sortie (201A, 201B) de telle sorte que l'élément d'engagement associé (31A, 31B) ne puisse pas être déplacé dans la direction d'ouverture (Y) pour ouvrir le dispositif de fermeture (1) à partir de l'ouverture d'insertion (X).

15. Dispositif de fermeture (1) selon l'une quelconque des revendications précédentes, **caractérisé en ce que** la première partie de fermeture (2) comporte un premier élément magnétique (25A, 25B) et la deuxième partie de fermeture (2) comporte un deuxième élément magnétique (32A, 32B), le premier élément magnétique (25A, 25B) et le deuxième élément magnétique (32A, 32B) coopérant par attraction magnétique afin de faciliter magnétiquement le rattachement de la première partie de fermeture (2) et de la deuxième partie de fermeture (3) pour fermer le dispositif de fermeture (1).
